# FASCICULE DE BREVET EUROPEEN

(11) **EP 1 749 643 B1**
(45) Date de publication et mention de la délivrance du brevet: **24.12.2008**
(21) Numéro de dépôt: 06117816.6
(22) Date de dépôt: 25.07.2006
(51) Int. Cl.: B29C 70/38, B29C 53/80, B65H 57/04

(54) **Procédé de placement d'au moins un élément filaire, particulièrement adapté à la constitution de préformes de type annulaire ou ellipsoïdale**
Platzierungsverfahren eines Drahtelementes, das für die Bildung von ring- oder ellipsoidartigen Vorformlingen geeignet ist
Method of placement of at least one wire element, particularly adapted to the forming of annular or ellipsoidal preforms

(30) Priorité: 29.07.2005 FR 0508136; 29.07.2005 FR 0508137
(43) Date de publication de la demande: 07.02.2007
(73) Titulaire: Hexcel Reinforcements, 69608 Villeurbanne Cedex (FR)
(72) Inventeur: Bruyère, Alain, 38630 Les Avenières (FR); Thiel, Jean-Benoit, 38110 La Chapelle de la Tour (FR)
(74) Mandataire: Sarlin, Laure V.

(56) Documents cités:
- EP-A- 0 113 717
- EP-A- 0 681 981
- FR-A- 2 579 964
- US-A- 3 130 453
- US-A- 4 877 471

## Description

La présente invention concerne le domaine technique des préformes composites. L'invention a pour objet un procédé de placement d'au moins un élément filaire et, en particulier de différents éléments filaires s'étendant selon des directions non parallèles. Un tel procédé est particulièrement adapté à la constitution de préformes dont au moins une partie est de type annulaire ou ellipsoidale.

La fabrication de pièces ou d'articles composites, c'est-à-dire comprenant, d'une part, un ou plusieurs renforts fibreux et, d'autre part, une matrice de résine de type thermoplastique ou thermodurcissable, est, par exemple, réalisée selon un procédé mettant en oeuvre la technique de moulage et transfert de résine (RTM) de l'anglais « Resin Transfer Molding », ou les procédés par infusion de résine, LRP (de l'anglais « Liquid Resin Infusion), ou RFI (de l'anglais « Resin Film Infusion »). Ce procédé comprend deux étapes, tout d'abord fabriquer une préforme fibreuse de la forme de l'article fini désiré, puis imprégner cette préforme d'une résine thermoplastique ou thermodurcissable. La résine est injectée ou infusée par aspiration, puis subit un thermocompressage pour entraîner son durcissement après polymérisation.

La préforme contient généralement plusieurs nappes superposées d'éléments filaires, liées entre elles, par exemple par l'intermédiaire d'un liant, de façon à donner une certaine cohérence à la préforme et ainsi autoriser sa manipulation. La préforme ne contient qu'une faible quantité de liant présent uniquement pour assurer la liaison des éléments filaires entre eux. La résine nécessaire à la réalisation de la pièce est ajoutée ultérieurement lors du moulage de la pièce souhaitée. Les éléments filaires peuvent être soit des fils, soit des câbles, en fonction du nombre de filaments ou fibres qui les constituent. Le plus souvent, une préforme est constituée d'une superposition de nappes unidirectionnelles, c'est-à-dire que dans chacune des nappes constitutives les éléments filaires s'étendent parallèlement les uns aux autres, les différentes nappes unidirectionnelles s'étendant selon des directions différentes.

Pour les applications dans le domaine aéronautique, aérospatiale, automobile, notamment, il est parfois nécessaire de disposer de préformes dont au moins une partie est du type annulaire, ellipsoïdale ou tronconique, comme c'est par exemple le cas pour la constitution de châssis, hublots, tuyères ou entrées de réacteurs. L'utilisation de préformes constituées de nappes unidirectionnelles pour la réalisation de telles pièces conduit à l'obtention de pièces présentant des caractéristiques mécaniques qui ne sont pas toujours adaptées à leur usage, dans la mesure où les éléments filaires de renfort, constitutifs des nappes fibreuses, ne sont pas convenablement orientés par rapport aux lignes de courbure de la pièce mécanique le long desquelles s'exercent généralement les principales contraintes.

Pour la réalisation de telles préformes qui présentent une forme s'étendant selon au moins une ligne génératrice longitudinale courbe, il est nécessaire, pour obtenir des propriétés mécaniques satisfaisantes, de déposer des nappes d'éléments filaires non parallèles à la ligne génératrice courbe, qui par exemple s'étendent sensiblement transversalement à la ligne génératrice courbe. Il est très difficile de réaliser de telles nappes qui présentent une couverture homogène, avec le moins possible de zone de vide. En effet, si la nappe radiale ne recouvre pas toute la surface de la préforme, les propriétés mécaniques obtenues ne sont pas satisfaisantes.

Les documents FR 2 579 964, US 4,877,471 et EP 0 113 717 décrivent des moyens de placement où la largeur totale d'une nappe ou mèche constituée d'une série d'éléments filaires est variable. La largeur d'un élément filaire seule, reste elle inchangée.

Dans ce contexte, un des buts de l'invention est de proposer un nouveau procédé de placement d'élément filaire. Ce procédé permettra notamment d'obtenir des nappes de surface lisse, sans irrégularité de type trou ou vide. En particulier, la présente invention se propose de fournir un procédé de réalisation de nappes d'éléments filaires non parallèles constitutives de préformes du type annulaire ou ellipsoïdale qui permettent d'obtenir une absence de vide ou défaut.

La présente invention a également pour objet les préformes résultantes.

Un autre but de l'invention est de proposer un dispositif adapté pour mettre en oeuvre un tel procédé.

L'invention a donc pour objet un procédé de placement d'au moins un élément filaire sur une surface, dans lequel, l'élément filaire est déposé sur la surface et est lié à au moins une partie de ladite surface, la largeur de l'élément filaire déposé variant longitudinalement caractérisé en ce que la largeur de l'élément filaire est modifiée, en amont de la dépose, grâce à des moyens de réglage de sa largeur.

Selon des variantes préférées, le procédé selon l'invention comprend une ou plusieurs des caractéristiques ci-dessous, lorsqu'elles ne s'excluent pas l'une l'autre :
- l'élément filaire est sec, avant sa dépose,
- l'élément filaire est, en amont des moyens de réglage, positionné précisément, par rapport à ces derniers,
- l'élément filaire est amené sur les moyens de réglage, de façon à être centré sur ces derniers,
- les moyens de réglages délimitent une section de passage pour l'élément filaire de largeur variable, de préférence à fond plat ; le fond de la section de passage est délimité de façon avantageuse, par un support d'appui pour l'élément filaire, de forme cylindrique ;
- une série d'éléments filaires est déposée, de préférence simultanément, selon des directions non parallèles, en faisant varier la largeur de chacun desdits éléments filaires, ainsi, la modification de la largeur de chaque élément filaire est associée à une modification de la distance entre deux éléments filaires voisins,
- une série d'éléments filaires est déposée, de préférence simultanément, selon des directions convergentes, en faisant décroître la largeur de chacun desdits éléments filaires dans le sens de la convergence ; de préférence, la largeur des éléments filaires décroît, de façon proportionnelle à la distance séparant les fibres moyennes de deux éléments filaires consécutifs ; selon cette variante de mise en oeuvre de la forme préférée du procédé selon l'invention, la largeur de chaque élément filaire est modifiée proportionnellement à la modification de la distance entre les fibres moyennes des éléments filaires ;
- la distance entre les fibres moyennes des éléments filaires est modifiée, de manière à déposer les éléments filaires pour qu'ils forment, avec une famille de lignes de courbure d'une partie au moins de la surface du support, un angle α compris entre 25° et 65° ; en particulier, la surface, sur laquelle les éléments filaires sont déposés, s'étend longitudinalement, selon une ligne génératrice courbe, et les éléments filaires sont déposés pour être sécants avec la ligne génératrice longitudinale (L), chaque élément filaire formant à son point d'intersection avec cette dernière un angle identique non nul et, de préférence, les éléments filaires forment un angle de 90°, +60°, - 60°, +45° ou -45° avec la ligne génératrice ; ces variantes permettent, notamment, d'augmenter l'isotropie de la pièce mécanique les incorporant
- les éléments filaires sont déposés de façon à ce qu'il n'existe aucun espace ou vide entre deux éléments filaires consécutifs déposés sur la surface,
- les éléments filaires sont déposés sous la forme de segments adjacents sur toute leur longueur ; les éléments filaires sont déposés de manière à être jointifs, au niveau de la surface du support, c'est-à-dire chacun en contact avec le ou les éléments filaires voisins ; cette variante de mise en oeuvre permet d'obtenir une couverture homogène de la surface du support sans interstice entre les différents éléments filaires déposés,
- la surface sur laquelle sont déposés les éléments filaires est de forme annulaire,
- les éléments filaires sont en une matière choisie parmi le carbone, les céramiques, verres ou aramides,
- les éléments filaires sont des fils continus,
- les éléments filaires sont des fils continus constitués d'un ensemble de 3 000 à 24 000 filaments,
- la liaison des éléments filaires à la surface est réalisée par un liant chimique.

Un autre objet de l'invention est relatif à un procédé de réalisation d'une préforme comprenant les étapes qui consistent à superposer plusieurs nappes fibreuses s'étendant selon des directions différentes, et lier les nappes superposées entre elles, caractérisé en ce qu'au moins une partie de l'une des nappes est réalisée selon le procédé tel que défini ci-dessus.

L'invention concerne également les préformes susceptibles d'être obtenues par un tel procédé.

Les variantes préférées résultant du procédé ci-dessus s'appliquent également aux préformes conformes à l'invention.

Enfin, la présente invention est relative à un dispositif de placement d'au moins un élément filaire, sur une surface, qui comprend des moyens de prise en charge et d'avance d'un élément filaire, sur des moyens de réglage, avant dépôt, de la largueur de l'élément filaire, dans sa direction longitudinale et des moyens de dépose de l'élément filaire, selon la direction souhaitée.

L'invention va maintenant être décrite en détails, en se référant aux figures annexées.
La **fig. 1** illustre un mode de réalisation du procédé selon l'invention.
La **fig. 2** est une vue de face de moyens de réglage de la largeur d'un élément filaire, conforme à l'invention.
La **fig. 3** est une vue de face d'une autre variante de moyens de réglage de la largeur d'un élément filaire, conforme à l'invention.
La **fig. 4** est une vue de face d'une forme du dispositif de dépose selon l'invention permettant une modification de la distance des éléments filaires et une modification de la largeur de ces derniers.
La **fig. 5** est une vue de droite du dispositif selon la **fig. 4****.**
La **fig. 6** est une vue, analogue à la **fig. 4****,** montrant une autre phase de fonctionnement du dispositif.
Les **fig. 7** et **8** montrent des détails constructifs de moyens de guidage des éléments filaires constitutifs du dispositif illustré aux **fig. 4** à **6****.**
La **fig. 9** montre une caractéristique avantageuse d'une dépose multi éléments filaires.
La **fig. 10** est une vue analogue à la **fig. 9****.**
Les **fig. 11A** et **11B** sont des vues analogues aux **fig. 4 et 6****,** d'un autre dispositif selon l'invention intégrant des moyens de positionnement.
La **fig. 12** est une vue analogue à la **fig. 6** d'une autre variante de dispositif conforme à l'invention.
La **fig. 13** est une vue de face d'une variante de réalisation de moyens de positionnement des éléments filaires, par rapport aux moyens de calibrage.
La **fig. 14** est une vue en perspective d'un mode de réalisation de moyens de calibrage d'une série d'éléments filaires.

Dans le cadre de la présente invention, il est prévu de faire varier la largeur d'un élément filaire, et ainsi d'obtenir un recouvrement adapté à la surface sur laquelle l'élément filaire est déposé, même dans le cas où cette surface est de forme complexe. La variation de largeur de l'élément filaire est obtenue par passage de ce dernier sur, ou au travers de moyens de réglage qui délimitent une ouverture de calibrage. L'élément filaire est plus ou moins étalé, lorsque l'ouverture de calibrage délimite une section de passage pour l'élément filaire supérieure à sa largeur avant passage dans l'ouverture, ou bien, l'élément filaire est compressé plus ou moins dans le cas contraire. Il n'est nullement opéré une découpe sur ce dernier. Cette variation de largeur est obtenue grâce à des moyens de réglage qui sont adaptés pour modifier la largeur **5** d'éléments filaires à l'état sec. La largeur est modifiée en conservant l'intégrité de l'élément filaire, c'est-à-dire sans perte de matière et à nombre de filaments constant.

Dans le cadre de l'invention, il est possible d'obtenir une nappe d'éléments filaires dont l'homogénéité de recouvrement est obtenue en faisant varier la largeur du ou des éléments filaires déposés. En effet, selon un mode de réalisation particulier, pour obtenir un recouvrement continu de la surface sur laquelle les éléments filaires sont déposés, l'invention prévoit d'associer un dépôt d'éléments filaires voisins s'étendant selon des directions convergentes, à une diminution de la largeur des éléments filaires dans le sens de la convergence. Ainsi, la distance, mesurée au niveau de la surface du support entre les fibres moyennes de deux éléments filaires voisins, est modifiée au cours de l'opération de dépose sur une partie au moins de la surface du support. Au sens de l'invention, la fibre moyenne de chaque élément filaire correspond à une ligne fictive s'étendant le long de l'élément filaire à égale distance de ses bords. La fibre moyenne peut également être définie comme le lieu géométrique des isobarycentres des sections droites transversales de l'élément filaire. Aussi, par la modification au cours de l'opération de dépose de la distance entre les fibres moyennes de deux éléments filaires voisins, il est possible de déposer des éléments filaires qui ne sont pas, au sein de la nappe fibreuse, parallèles entre eux, tout en présentant une orientation contrôlée, de manière à se trouver parfaitement orientés par rapport à la direction des contraintes principales qui seront subies par la pièce en matériaux composites incorporant la nappe d'éléments filaires réalisée selon le procédé conforme à l'invention.

Dans le cadre de l'invention, par élément filaire, on entend un fil ou câble constitué d'un ensemble de filaments ou fibres, sous la forme d'un faisceau. L'élément filaire est donc unitaire et ne comprend donc pas un ensemble de fils ou câbles. De façon classique, un câble comporte un nombre plus élevé de filaments qu'un fil. Les éléments filaires utilisés dans le cadre de l'invention sont, de préférence, en une matière choisie parmi le carbone, des céramiques, verres ou aramides, le carbone étant particulièrement préféré. Les céramiques utilisables sont notamment le carbure de silicium et les oxydes réfractaires, par exemple alumine et zircone. Un fil comporte en général de 3 000 à 80 000 filaments, avantageusement de 12 000 à 24 000 filaments. Dans le cas du carbone, on nomme généralement « câble », un élément filaire qui comporte plus de 50 000 (50K) filaments et « fil », un élément filaire qui comporte au plus 24 000 (12K) filaments. On voit donc bien qu'il n'existe pas de frontière précise entre fils et câbles, de plus celle-ci est généralement dépendante de la matière constitutive. De façon, particulièrement préférée, les éléments filaires utilisés dans le cadre de l'invention sont des fils de carbone de 3 à 24K. Les fibres constitutives peuvent être discontinues, craquées ou de préférence continues. De telles éléments filaires présentent en général une section droite transversale de type parallélépipédique, et donc une certaine largueur et épaisseur et sont, le plus souvent, qualifiés de fils ou câbles plats. A titre d'exemple, un fil de 3K présente généralement une largeur de 1 à 3 mm, un fil de 12K, une largeur de 3 à 8 mm et un fil de 24K, une largeur de 5 à 12 mm. Un fil de 3 000 à 24 000 filaments présentera donc le plus souvent une largeur de 1 à 12 mm. Les éléments filaires utilisés, dans le cadre de l'invention, sont secs, c'est-à-dire qu'ils ne sont ni imprégnés, ni enduits, ni associés à un quelconque liant avant leur passage dans les moyens de calibrage, ni, de préférence, avant leur dépose. Aussi, l'élément filaire est constitué essentiellement de fibres ou de filaments qui représentent au moins 98% de sa masse, le taux massique d'ensimage standard pouvant représenter au plus 2% de la masse de l'élément filaire.

De tels éléments filaires sont généralement vendus sous la forme d'une bobine, avec une certaine largeur. Il existe différents moyens pour augmenter ou diminuer la largeur d'un élément filaire. Sa largeur peut être augmentée en étalant les filaments, par passage sur des barres circulaires ou par des techniques de vibration. On pourra, par exemple, se référer à la demande de brevet WO 98/44183 au nom de la SNECMA et de la demanderesse qui donne plusieurs techniques d'étalement de câbles. Il est également possible de diminuer la largeur d'un fil en le faisant passer, avec contrainte, entre deux parois. Pour une dépose simultanée, il sera utilisé autant de bobines que d'éléments filaires déposés simultanément.

Au sens de l'invention, les lignes de courbure sont des lignes de la surface, sur laquelle le ou les éléments filaires sont déposés, dont la torsion géodésique est nulle. Ainsi, pour une surface de révolution, il existe les deux familles de lignes de courbure qui sont formées des méridiennes et des parallèles et, pour une surface développable, il existe également deux familles de lignes de courbure qui sont les (droites) génératrices et leurs trajectoires orthogonales. La médiane des parallèles dans le premier cas, et la médiane des génératrices dans le deuxième cas, seront appelées dans la présente invention ligne génératrice longitudinale.

Dans le cadre de l'invention, on dépose au moins un élément filaire de largeur non constante, si l'on se déplace le long de l'élément filaire. La largeur de l'élément filaire est mesurée sur la surface sur laquelle il est déposé, transversalement à la fibre moyenne de l'élément filaire. Ceci peut être avantageux, par exemple, dans le cas où l'élément filaire doit être déposé sur une surface où une cavité a été aménagée et que le dépôt de l'élément filaire doit être effectué au niveau de cette cavité.

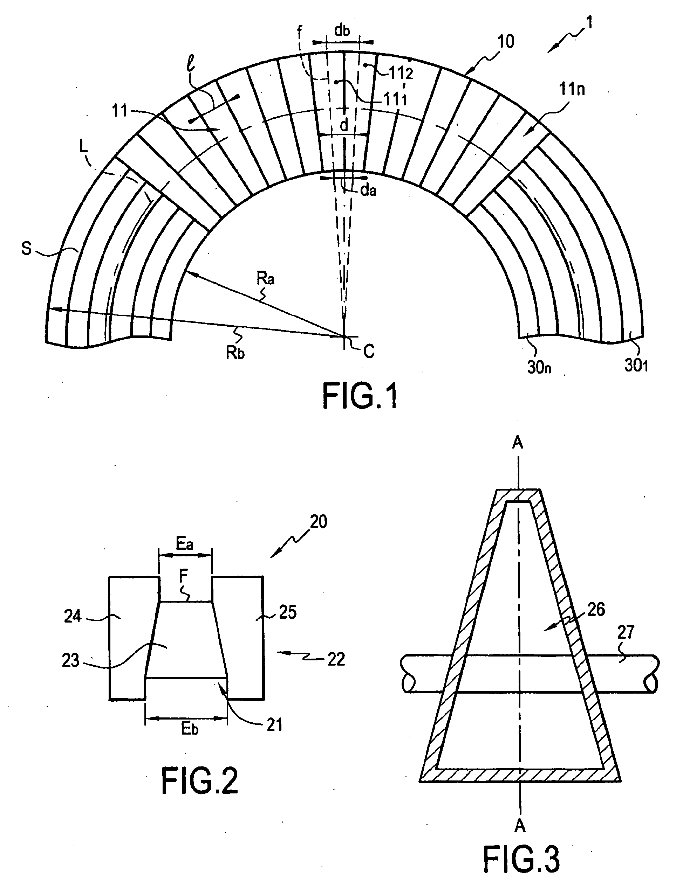

Le procédé selon l'invention est, tout particulièrement, adapté pour être mis en oeuvre dans la constitution de préformes. Pour l'industrie automobile ou aéronautique, par exemple, il est souvent nécessaire de réaliser des préformes dont au moins une partie de la surface s'étend selon une ligne génératrice longitudinale **L** courbe et sur laquelle, lorsque l'on se déplace transversalement à la ligne génératrice longitudinale courbe, les lignes de courbures longitudinales ne présentent pas un rayon de courbure constant. De telles surfaces seront nommées dans le reste de la description, « surfaces courbes ». C'est, par exemple, le cas des surfaces présentant ou moins une partie annulaire, ellipsoïdale ou tronconique. Pour la réalisation de certaines préformes, dont au moins une partie de la surface **S** est courbe, on choisit, le plus souvent, en vue d'obtenir des propriétés mécaniques satisfaisantes, de déposer au moins une nappe **10** d'éléments filaires **11₁** à **11ₙ,** s'étendant selon un angle non nul par rapport à la ligne génératrice longitudinale **L.** Dans le cadre de la présente invention et comme le montre schématiquement la **fig. 1****,** il est envisagé de réaliser une nappe fibreuse sur un support 1 en procédant au dépôt d'une série d'éléments filaires **11₁** à **11ₙ,** de manière à, en une ou plusieurs passes, couvrir en partie au moins la surface **S** du support **1.** De préférence. Dans l'exemple illustré **fig. 1****,** qui représente une portion de surface annulaire, les éléments filaires **11₁** à **11ₙ** forment un angle de 90° avec la ligne génératrice longitudinale **L,** mais ces éléments filaires pourraient aussi bien former un angle de 60 ou 45°, par exemple. La ligne génératrice longitudinale **L** de la surface de dépose étant courbe, les éléments filaires **11₁** à **11ₙ** localement sécants, selon un angle sensiblement identique à cette ligne **L** ne sont donc pas parallèles, mais convergents vers la partie de la surface présentant le plus faible rayon de courbure **Rₐ,** comme illustré **fig. 1****.** Dans le cadre de l'invention, les éléments filaires déposés ont une largeur qui varie le long de l'élément filaire. De préférence, cette variation est régulière. Cette variation de la largeur des éléments filaires **11₁** à **11ₙ** permet de compenser la distance **d** existant entre leur fibre moyenne. Les éléments filaires **11** sont déposés de façon à ce que la fibre moyenne **f** de deux éléments filaires successifs convergent. Les éléments filaires sont déposés avec une largeur **I** qui s'étend parallèlement à la surface **S** sur laquelle ils sont déposés et qui croit, le long du fil, dans le sens de la convergence. Dans chaque nappe constitutive d'une préforme, les éléments filaires sont déposés les uns à côtés des autres, pour de préférence recouvrir l'ensemble de la surface sur laquelle ils sont déposés. C'est le cas dans le cadre de l'invention, les éléments filaires voisins **11₁** à **11ₙ** seront déposés, côte à côte préférentiellement, avec le moins d'espace possible entre deux éléments filaires successifs et/ou le moins de recouvrement possible. Le procédé selon l'invention permet de conserver une bonne régularité de surface de la nappe obtenue, tout en limitant les pertes de matière.

Dans l'exemple illustré **fig. 1****,** les éléments filaires sont transversaux et coupent la ligne génératrice **L** selon un angle droit. Plus précisément, c'est la ligne ou fibre moyenne **f** de l'élément filaire qui est orthogonale à la tangente à la ligne génératrice **L,** à leur point d'intersection. Dans le cas d'une préforme annulaire, comme représentée **fig. 1****,** la fibre moyenne **f** de chaque élément filaire **11,** coïncide sensiblement avec un rayon de l'anneau et passe donc par le centre C de l'anneau. Dans l'exemple illustré, la largeur **I** d'un élément filaire **11** croit, lorsque l'on se déplace radialement de la partie de la surface présentant le plus faible rayon de courbure **Rₐ,** jusqu'à la partie de la surface présentant le plus grand rayon de courbure **R_{b}.** Aussi, de façon avantageusement, la largeur **I** des éléments filaires **11** décroît, de façon proportionnelle à la distance **d** séparant les fibres moyennes **f** de deux éléments filaires consécutifs. Au niveau du bord externe de la surface annulaire correspondant au rayon de courbure **R_{b},** cette distance **d_{b}** est supérieure à la distance **dₐ** existant au niveau du bord interne. De façon à assurer une couverture complète de la surface à recouvrir, les éléments filaires transversaux sont, de préférence, déposés côte à côte et de façon adjacente sur toute leur longueur.

Dans le cas d'une préforme annulaire, les éléments filaires **11** transversaux sont déposés de façon à ce que leur fibre moyenne **f,** s'étend radialement sur la surface annulaire. Si l'on souhaite déposer un fil d'une largeur initiale **l** donnée selon une direction radiale sur une surface circulaire de rayon intérieur **Rₐ** et de rayon extérieur **R_{b}** et que l'on souhaite que le nappage soit homogène on calculera le nombre de fils à déposer (nbrF) sur la surface circulaire en divisant la longueur de l'arc de circonférence (alpha*R rayon qui varie de Rₐ à R_{b}) par la largeur du fil soit :

**I** =alpha*R / nbrF . Aussi, si l'on souhaite conserver l'homogénéité de la dépose au niveau du diamètre extérieur **R_{b},** on fera varier la largeur **I** des fils de façon directement proportionnelle au rayon de courbure. Dans le cas où les éléments filaires sont déposés sur une surface annulaire, ils se présentent donc, de préférence, sous la forme de segments de dimensions identiques, comme illustré **fig. 1****.**

Dans le cas d'une surface annulaire, comme c'est le cas dans l'exemple illustré, la largeur des éléments filaires sera modifiée, pour tous les éléments, de la même façon. Dans d'autres cas, la largeur pourra être modifiée pour chaque élément filaire individuellement selon des amplitudes et/ou des sens différents.

Lorsqu'il sort d'une bobine, un élément filaire présente une largeur constante. La largeur de l'élément filaire est modifiée, dans le cadre de l'invention, avant sa dépose sur la surface. Avant la dépose, il est donc nécessaire de faire passer le ou les éléments filaires sur des moyens permettant de faire varier leur largeur, dans le sens longitudinal. Ces moyens peuvent être qualifiés de moyens de modification de la largeur de chaque élément filaire ou encore de moyens de réglage ou de calibrage de la largeur de chaque élément filaire. Les moyens de calibrage définissent une ouverture ou espace de calibrage au travers duquel passe l'élément filaire, cette ouverture de calibrage étant modifiée au cours de la dépose. L'élément filaire va être amené de façon à traverser cette ouverture de calibrage, le passage s'effectuant selon une section de passage. L'élément filaire est en appui, au niveau de la section de passage qu'il traverse, sur le fond de cette dernière. Par passage de l'élément filaire à l'intérieur de cette ouverture de calibrage, il est alors possible d'en modifier sa largeur en continu, en faisant varier la largeur de la section de passage. L'ouverture de calibrage possède une section de passage de largeur variable, de préférence de forme rectangulaire ou en « U », et avantageusement à fond plat. La largeur de l'ouverture de calibrage, mesurée parallèlement à son fond, est modifiée au cours du procédé, de préférence, en continu de façon à faire varier, par croissance ou décroissance, la largeur de l'élément filaire.

De façon avantageuse, la variation obtenue est régulière. De façon avantageuse, le fond de la section de passage pour l'élément filaire est délimité par un support d'appui pour l'élément filaire de forme cylindrique. Aussi, lorsque l'élément filaire qui va traverser la section de passage possède une largeur inférieure à celle de la section de passage, la tension appliquée sur ce dernier permettant son défilement, va permettre de l'étaler sur le support cylindrique.

La **fig. 2** illustre un mode de réalisation de moyens de réglage conforme à l'invention, sous la forme d'une gorge **20** de largeur variable, dont la largeur est choisie en fonction de la largeur de l'élément filaire souhaitée. La variation de largeur le long de l'élément filaire peut être obtenue en faisant passer, avant dépose, l'élément filaire dans une gorge périphérique **21** aménagée sur un élément cylindrique **22,** de façon à ce que la largeur de la section de passage croît d'une valeur **Eₐ** à une valeur **E_{b}** lorsque l'on se déplace, à l'intérieur de la gorge, autour de l'élément cylindrique sur une moitié de la circonférence du cylindre, puis décroît de la valeur **Eₐ** à la valeur **E_{b},** lorsque l'on se déplace sur l'autre moitié. Il est également possible de faire varier la largeur de l'élément filaire jusqu'à une valeur intermédiaire comprise entre ces deux valeurs, en fonction de la rotation appliquée à l'élément cylindrique **22.** La largeur de l'élément filaire avant passage sur les moyens **20** permettant d'ajuster sa largeur correspondra, par exemple, à la valeur maximale d'étalement **E_{b}.**

En tant que moyens **20,** une barre cylindrique **23** délimitée par deux disques **24** et **25** d'épaisseur variable comme illustré **fig. 2** peut, par exemple, être utilisée. La gorge peut également être directement usinée dans l'élément cylindrique. Dans cette variante de réalisation, les disques forment les parois de la gorge, qui délimitent une section de passage de largeur variable pour un élément filaire. Le tout est mis en rotation autour de l'axe de l'élément cylindrique. L'élément filaire est alors alimenté, de façon à arriver à plat et perpendiculairement à l'axe de l'élément cylindrique, c'est-à-dire que l'élément filaire arrive tangentiellement à la barre cylindrique, sa largeur étant parallèle à la barre. Il ressort, par exemple, après avoir fait sensiblement un demi-tour ou un quart de tour autour de l'élément cylindrique, qui est en rotation. La vitesse de rotation de l'élément cylindrique est ajustée en fonction de la vitesse de défilement de l'élément filaire. Il est ainsi possible de faire varier, en continu, la largeur de l'élément filaire qui est déterminée par la largeur de la section de la gorge, au niveau de la sortie de l'élément filaire. En général, l'élément filaire est découpé en sortie des moyens **20,** pour obtenir un segment de la longueur souhaité. En synchronisant la vitesse d'avance d'un élément filaire, avec la vitesse de rotation de la dite barre circulaire, il est possible d'obtenir un segment de fils de la longueur désirée dont la largeur croit régulièrement de la valeur **Eₐ** à la valeur **E_{b},** ou décroît de la valeur **E_{b}** à la valeur **Eₐ.** Il est également possible d'obtenir un segment de fils de la longueur désirée dont la largeur varie entre **Eₐ** et **E_{b},** sans atteindre ces deux valeurs.

De façon avantageuse, et comme illustré sur la **fig.2****,** la gorge de calibrage **21** présente un fond **F** plat. Cette géométrie permet d'éviter tout glissement de l'élément filaire au fond de la gorge, ce qui est le cas d'une gorge à fond convexe. Une gorge à fond plat autorise une parfaite maîtrise de la largeur de l'élément filaire et permet un calibrage fin du fil.

En tant qu'autre moyen de calibrage, il pourrait être envisagé d'utiliser une fenêtre **26** de largeur variable comme illustré **fig. 3****,** dans laquelle l'élément filaire serait amené de façon à arriver, de préférence, perpendiculairement au plan de la fenêtre **26.** La fenêtre **26** illustrée **fig. 3** présente un axe de symétrie **A.** Ainsi, en déplaçant de façon relative, l'élément filaire et la fenêtre **26** par translation parallèlement à l'axe de symétrie **A,** il est possible de modifier la largeur du fil et de faire varier sa largeur au cours de sa dépose. L'élément filaire vient prendre appui, en amont ou en aval, de la fenêtre sur un support d'appui **27** de forme cylindrique qui peut être une barre d'appui ou directement en aval de la fenêtre sur un cylindre applicateur. Un déplacement relatif intervient donc également entre le support d'appui **27** et la fenêtre **26** par translation parallèlement à l'axe de symétrie **A.** Dans ce cas, le support d'appui **27** délimite donc le fond de l'ouverture de calibrage.

De façon avantageuse, les moyens de calibrage se trouveront à une distance faible du support, de façon à conserver le calibrage obtenu. Cette distance est déterminée pour éviter que l'élément filaire à l'état sec, qui se trouve sous une tension imposée par son défilement, ne perde son calibrage et en particulier se rétrécisse, en sortie des moyens de calibrage.

De façon à assurer un calibrage déterminé, le procédé prévoit selon une variante avantageuse, de positionner de manière précise l'élément filaire par rapport aux moyens de calibrage. En particulier, l'élément filaire sera positionné de façon à arriver centré dans l'ouverture de calibrage. C'est-à-dire que des moyens de positionnement de l'élément filaire seront utilisés de façon à ce que l'élément filaire arrive dans l'ouverture de calibrage, de manière à ce que sa fibre moyenne coïncide avec le centre de l'ouverture de calibrage. Plus précisément, la fibre moyenne sera de préférence alignée sur le plan bisecteur de la section de passage de l'élément filaire délimitée par l'ouverture de calibrage, au niveau de l'entrée de l'élément filaire dans les moyens de calibrage. Dans le cas où plusieurs éléments filaires, le plus souvent sous la forme de segments, doivent être déposés, ces derniers pourront être déposés successivement ou simultanément. Pour former une nappe, une série d'éléments filaires sont déposés côte à côte. De façon avantageuse, ces segments seront déposés de façon, à recouvrir toute la surface sur laquelle ils sont déposés, et à s'étendre selon des directions convergentes, comme par exemple illustré **fig. 1****.** La variation de la largeur des éléments filaires déposés dans le sens de la convergence, autorise une disposition des segments exactement bord à bord. Ces segments peuvent provenir du même élément filaire ou d'éléments filaires différents. Par la modification de la distance entre les fibres moyennes des éléments filaires déposés simultanément, l'invention permet donc une parfaite adéquation de l'orientation des éléments filaires à la nature de la surface du support. De même, par la modification de la largeur des éléments filaires, l'invention permet une parfaite adéquation de l'orientation des filaments constitutifs de chaque élément filaire à la nature du support. Dit autrement, la modification des distances inter fibres moyennes permet une maîtrise de l'orientation à l'échelle des éléments filaires, tandis que la modification de la largeur de chaque élément filaire permet une maîtrise de l'orientation à l'échelle des fils ou filaments qui les constituent.

Les éléments filaires peuvent être déposés de toute façon appropriée, manuellement ou, encore, au moyen d'un automate. Les éléments filaires sont déposés et peuvent être découpés sous la forme de segments de largeur croissante (ou décroissante). Selon un mode de réalisation, les éléments filaires sont amenés et déposés sur la surface en mouvement, qui est progressivement déplacée selon sa ligne génératrice longitudinale. La surface peut également être fixe et le déplacement intervenir au niveau du dispositif de dépose qui sera mis en mouvement au moyen d'un automate. Il est possible de déposer un seul élément filaire à chaque passe ou encore de déposer simultanément plusieurs éléments filaires à chaque passe. Dans le cas d'une surface annulaire ou ellipsoïdale, ce déplacement de la surface de dépose, se fait par rotation autour de son axe, avec un pas de rotation correspondant à la largeur des segments déposés. La présente invention a également pour objet un dispositif de placement d'au moins un élément filaire, sur une surface, qui comprend des moyens de prise en charge et d'avance d'un élément filaire, sur des moyens permettant de faire varier la largeur de l'élément filaire, dans sa direction longitudinale et des moyens de dépose de l'élément filaire, selon la direction souhaitée. Le dispositif selon l'invention permet de placer un élément filaire ou une série d'éléments filaires. Les moyens de dépose de l'élément filaire, selon la direction souhaitée comprennent des moyens de guidage de l'élément filaire et des moyens d'application de l'élément filaire sur la surface du support. En d'autres termes, un tel dispositif comprend des moyens d'amenée de l'élément filaire, des moyens de guidage de l'élément filaire, des moyens de calibrage de l'élément filaire et des moyens d'application de l'élément filaire sur la surface du support. Dans le cas d'une dépose simultanée d'éléments filaires, ces moyens sont présents pour chaque élément filaire, sous la forme de moyen individuel ou collectif.

Selon une variante de mise en oeuvre, le dispositif selon l'invention comprend des moyens pour faire varier en continu l'ouverture de calibrage de façon à faire varier de façon régulière, par croissance ou décroissance, la largeur de l'élément filaire.

Selon l'invention, dans le cas d'une dépose simultanée, les moyens de modification de la largeur des éléments filaires peuvent être adaptés pour modifier d'une même valeur la largeur de tous les éléments filaires déposés ou, au contraire, être adaptés pour modifier, de manière individualisée, la largeur de chaque élément filaire selon des amplitudes et/ou des sens différents d'un élément filaire à l'autre et/ou d'un groupe d'éléments filaires à un autre groupe d'éléments filaires.

Selon une caractéristique de l'invention, les moyens de modification de la largeur de chaque élément filaire sont intégrés à des moyens de guidage individuel de chaque élément filaire.

Selon une autre caractéristique de l'invention, les moyens de modification de la largeur du ou de chaque élément filaire comprennent une gorge de guidage de largeur variable. Selon une forme préférée de réalisation de l'invention les moyens de modification de la largeur du ou de chaque élément filaire comprennent :
■ un cylindre de guidage d'axe Ω présentant une gorge de calibrage qui est aménagée sur une partie au moins de la périphérie du cylindre et possède une largeur variable et dont une partie seulement, dite partie active, est en relation avec l'élément filaire, en sortie de l'élément filaire des moyens de modification de sa largeur,
■ et des moyens de déplacement en rotation du cylindre de guidage selon l'axe Ω, de manière à permettre une modification de la partie de la gorge de calibrage formant la partie active en relation avec l'élément filaire.

Selon l'invention, dans le cas d'une dépose simultanée de plusieurs éléments filaires, les moyens de guidage des éléments filaires peuvent être réalisés de différentes manières appropriées et assurer un guidage individuel ou collectif des éléments filaires.

Dans une variante de réalisation du dispositif selon l'invention, les moyens de guidage comprennent des moyens de guidage individuels de chaque élément filaire et des moyens de calibrage individuel de chaque élément filaire. Selon une variante avantageuse, le dispositif comprend également, des moyens de modification de la distance entre les fibres moyennes des éléments filaires, qui, de façon préférée sont des moyens de modification de la distance entre les moyens de guidage individuel de chaque élément filaire.

Selon une variante avantageuse, les moyens de guidage comprennent des moyens de modification de la distance entre les fibres moyennes d'au moins deux éléments filaires voisins, de manière à permettre une modification de la distance, mesurée au niveau de la surface du support, entre les fibres moyennes des deux éléments filaires voisins. Selon l'invention, les moyens de modification de la distance inter fibres moyennes peuvent concerner :
■ seulement certains éléments filaires pour ne permettre qu'une modification de la distance inter fibre moyenne pour ces seuls éléments filaires,
■ ou, de préférence, l'ensemble des éléments filaires, de manière à permettre une modification de l'ensemble des distances inter fibres moyennes.

De même, les moyens de modification de la distance inter fibres moyennes peuvent être adaptés pour permettre une modification d'une même valeur pour l'ensemble des éléments filaires, ou au contraire, permettre une modification individualisée de chaque distance entre les fibres moyennes de deux éléments filaires voisins.

Dans le cadre de la forme préférée de réalisation avec gorge de guidage à largeur variable telle que définie ci-dessus et, d'un dispositif de dépose simultanée d'une série d'éléments filaires, afin de permettre, une modification de la distance entre les fibres moyennes d'éléments filaires déposés simultanément, le dispositif selon l'invention comprend, en outre, des moyens de modification de la distance entre les parties actives des cylindres de guidage, en tant que moyens de modification de la distance inter fibres.

Selon une variante, un tel dispositif comporte en amont des moyens de réglage, des moyens de positionnement de chaque élément filaire par rapport aux moyens assurant le réglage de sa largeur. En particulier, ces moyens de positionnement sont des moyens de centrage de chaque élément filaire sur ses moyens de calibrage. De tels moyens de centrage peuvent être constitués, notamment par un peigne rotatif ou un peigne à dents non parallèles, en particulier convergentes.

Selon une autre variante, le dispositif selon l'invention comporte des moyens de dépose d'une nappe d'éléments filaires, sur une surface, selon des directions convergentes et des moyens de réglage, pour obtenir avant dépôt, lesdits éléments filaires avec une largeur décroissante dans le sens de la convergence.

Selon une variante préférée, on utilisera des moyens **20** permettant de faire varier la largueur de l'élément filaire qui comprennent une gorge périphérique **21** aménagée sur un élément cylindrique **22,** de largeur variable, et en particulier, la largeur de la gorge croit d'une valeur **Eₐ** à une valeur **E_{b}** lorsque l'on se déplace, à l'intérieur de la gorge, autour de l'élément cylindrique sur une moitié de la circonférence du cylindre, puis décroît de la valeur **Eₐ** à la valeur **E_{b},** lorsque l'on se déplace sur l'autre moitié.

L'installation comprend des moyens d'amenée et d'avance de l'élément filaire sur les moyens **20,** tel que précédemment définis, permettant d'ajuster sa largeur. De tels moyens peuvent par exemple se présenter sous la forme de deux galets rotatifs entre lesquels passe l'élément filaire en amont des moyens **20,** selon le sens de défilement de l'élément filaire. Afin de permettre la dépose de l'élément filaire en segments indépendants ou discontinus, des moyens de coupe de l'élément filaire peuvent également être prévu en sortie des moyens **20.**

Les moyens de dépose peuvent être réalisés de toute façon appropriée et selon les techniques bien connues de l'homme de l'art.

Selon une autre variante de réalisation, l'installation peut comprendre, en outre, des moyens d'application d'un liant sur la surface de dépose ou sur l'élément filaire lui-même, juste au moment de sa dépose.

Selon la nature du liant mis en oeuvre, qu'il soit ou non appliqué au moyen de l'installation, cette dernière peut comprendre, en outre, des moyens d'activation du liant pouvant être réalisés de toute façon appropriée, par exemple, sous la forme d'une source rayonnante, telle que, par exemple, une source de rayons infrarouges.

L'installation comporte une unité de commande permettant d'assurer la commande et la synchronisation des différentes parties de l'installation.

Selon encore une autre caractéristique de l'invention, le dispositif de dépose est destiné à être mis en oeuvre avec une installation ou un robot, tels que ceux décrits dans les brevets US 4 699 683 ou EP 0 535 264. A cet effet, le dispositif comprend alors des moyens d'adaptation sur un bras d'un robot ou d'une machine outil à au moins cinq degrés de liberté pour la dépose d'éléments filaires en nappe sur un support à surface complexe.

De façon avantageuse, une série d'éléments filaires sont déposés simultanément, ce qui permet une augmentation substantielle de la cadence de fabrication par rapport à un placement individuel de chaque élément filaire.

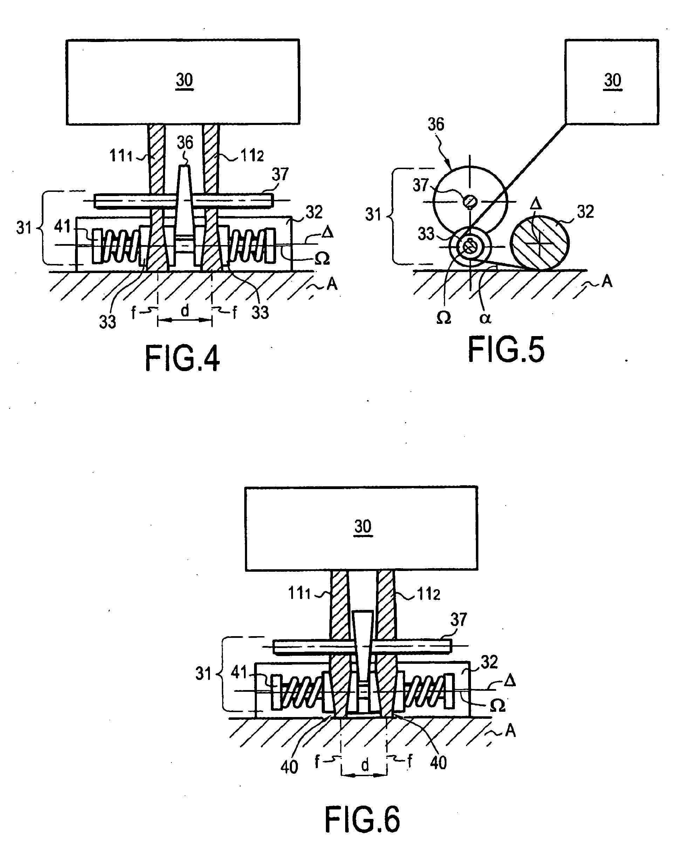

Différents type de dispositifs de dépose simultanée d'une série d'éléments filaires peuvent être utilisés pour permettre, tant la modification contrôlée de la distance inter fibres moyennes, que la modification contrôlée des largeurs des fibres moyennes. Dans une forme préférée de réalisation, le dispositif de dépose comprend, comme cela est montré aux **fig. 4** à **8**, des moyens d'amenée des éléments filaires **30,** des moyens de guidage des éléments filaires **31** et des moyens d'application des éléments filaires sur la surface du support **A.** Selon cet exemple, les moyens d'application comprennent un cylindre applicateur **32** d'axe Δ qui est mobile en rotation selon l'axe Δ et qui guide les éléments filaires avant leur application sur la surface **A** du support et les pressent sur ce dernier. Le rouleau applicateur est situé à une distance suffisante de la surface sur laquelle le ou les éléments filaires sont déposés, qui correspond sensiblement à la largeur de l'élément filaire, de façon à ne pas modifier l'épaisseur de l'élément filaire et donc sa largeur.

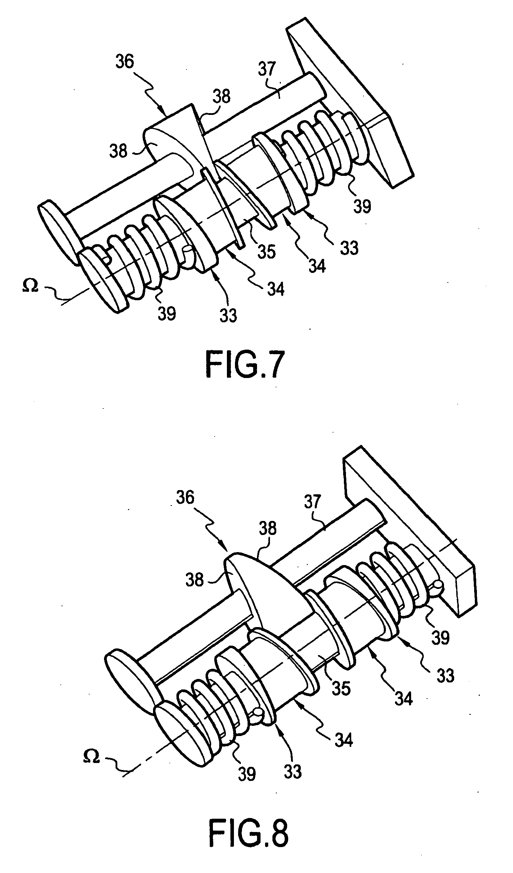

Les moyens de modification de la distance inter fibres moyennes et de la largeur des éléments filaires sont intégrés dans les moyens de guidage **31.** Aussi, comme illustré **fig.5****,** le cylindre applicateur **32** est positionné, de façon avantageuse, à une distance proche, et de préférence la plus proche possible de la sortie des moyens de guidage **31.** On évite ainsi que les éléments filaires, à l'état sec, en sortie des moyens de guidage, ne se rétrécissent sous l'effet de la tension qui leur est appliquée. De même, les moyens de guidage sont, de préférence, positionnés par rapport à la surface du support **A,** de façon à ce que l'angle α formé entre la trajectoire de l'élément filaire et la surface sur laquelle il est déposé, en son point de dépose soit inférieur à 20°. Ainsi, on obtient un enveloppement de l'élément filaire sur le cylindre applicateur **31** le plus faible possible, évitant ainsi un ré-élargissement du fil. Les moyens de guidage comprennent ici autant de moyens **31** de guidage individuel qu'il y a d'éléments filaires déposés soit, selon l'exemple illustré, deux moyens de guidage **31.** Comme cela ressort plus particulièrement des **fig. 7** et **8**, les moyens de guidage individuel comprennent chacun un cylindre **33,** d'axe Ω, pourvu d'une gorge **34** de réception et de guidage d'un élément filaire. Afin de permettre une modification de la distance, entre les fibres moyennes des éléments filaires et donc une modification de la distance entre les fibres moyennes ou le plan médian des gorges **34,** les cylindres **33** sont adaptés sur un arbre **35** d'axe Ω en étant mobiles en translation axiale le long de cet arbre et liés à cet arbre en rotation axiale. L'arbre **35** forme des moyens de déplacement. Le dispositif comprend alors des moyens de modification de la distance entre les moyens de guidage individuel **33** qui comprennent une came **36** ayant la forme d'un tronc de cylindre de révolution dont les bases convergent. La came **36** est portée par un arbre **37** d'axe Ω' dont elle est solidaire, tant en rotation qu'en translation. La came **36** est alors interposée entre les cylindres **33** qui sont maintenus chacun en contact contre une base **38** de la came **36** par un ressort **39.** Ainsi, par une rotation axiale de l'arbre **37** et donc de la came **36,** il est possible de modifier la distance entre les fibres moyennes des gorges de guidage **34,** comme cela ressort de la comparaison des **fig. 4** et **6** ou **7** et 8.

Les moyens de modification de la largeur de chaque élément filaire sont formés par chaque gorge **34,** dite alors de calibrage, qui est aménagée sur une partie au moins de la périphérie du cylindre **33** et possède une largeur variable, comme le montrent plus particulièrement les **fig. 7** et 8. Afin de permettre une modification de la partie **40,** dite partie active, de la gorge **34** qui est en relation avec l'élément filaire, le dispositif comprend des moyens **41** de déplacement en rotation du cylindre de guidage **35** selon l'axe Ω, de manière à permettre une modification de la partie de la gorge de calibrage formant la partie active en relation avec l'élément filaire. Ainsi, les parois latérales de la gorge contraignent plus ou moins l'élément filaire, constitué d'un faisceau de fils ou filaments, de manière à en ajuster la largeur, ajustement qui est opéré à nombre de filaments constant, sans altération structurelle ou dégradation de l'élément filaire ou de ses filaments ou fils constitutifs.

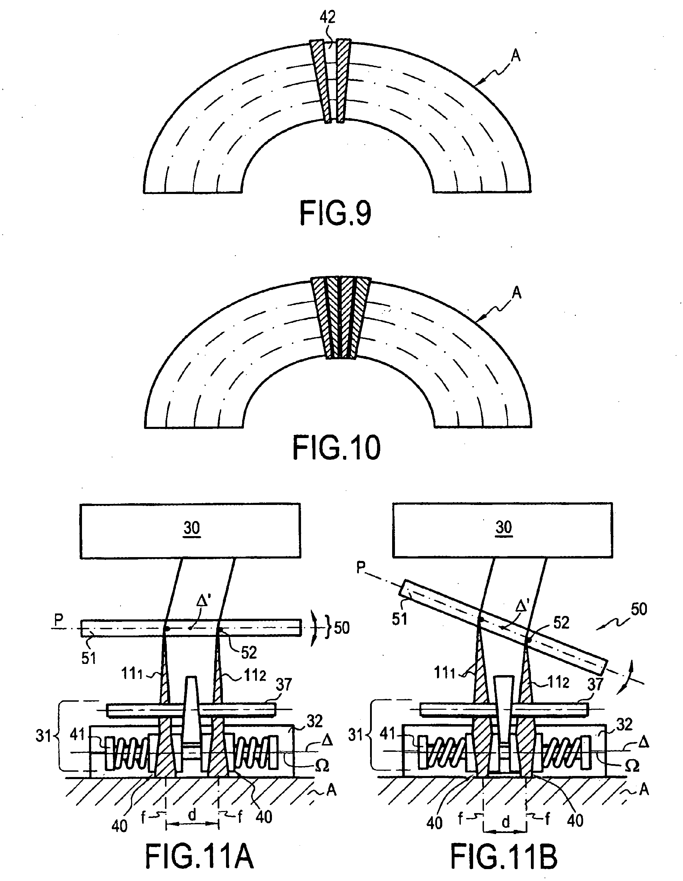

Lors de la mise en oeuvre du dispositif pour la réalisation d'une nappe fibreuse sur la surface **A,** lors d'une passe, il sera procédé à la dépose simultanée d'une série d'éléments filaires séparés deux à deux au niveau de la surface du support par un espace intercalaire **42,** comme illustré à la **fig. 9****.** Lors d'une passe suivante, il est procédé à la dépose simultanée d'une série d'éléments filaires, chacun placé dans l'espace intercalaire séparant les éléments filaires déposés lors de la passe à l'étape précédente comme illustré **fig. 10****.** Les éléments filaires seront, de préférence, déposés de manière à être jointifs pour assurer une couverture totale de la surface **A.** il apparaît donc que le procédé de dépose selon l'invention permet de maîtriser, tant l'orientation des éléments filaires et de leurs filaments constitutifs, que le taux de couverture de la surface de réception et cela à nombres d'éléments filaires et de filaments constants. Dans cette forme de mise en oeuvre, le procédé selon l'invention comprend :
■ une étape de dépose simultanée d'une série d'éléments filaires séparés deux à deux au niveau de la surface du support par un espace intercalaire,
■ et une étape de dépose simultanée d'une série d'éléments filaires, chacun placé dans un espace intercalaire séparant les éléments filaires déposés lors de l'étape précédente.

Afin de permettre le centrage de chaque élément filaire, par rapport à la gorge **34,** celle-ci se déplaçant sur le cylindre de guidage **35,** le dispositif comprend, en amont des moyens de guidage, des moyens de positionnement des éléments filaires. Les moyens de positionnement permettent de modifier la distance entre les éléments filaires, en amont des moyens de guidage **32** et de coordonner cette modification avec le déplacement des moyens de guidage **32.** En particulier, la variation de distance **d'** entre les fibres moyennes de deux éléments filaires voisins est modifiée de façon synchronisée avec le déplacement des moyens de calibrage. Sur l'exemple illustré **fig. 11A et 11B****,** le dispositif **1** est conforme à celui de la **fig. 6** et comprend, en outre, en amont des moyens de guidage **31** par rapport au sens de défilement des éléments filaires, un peigne **51** qui comprend au moins autant de dents **52** que d'éléments filaires **11₁** à **11ₙ** déposés simultanément. Les dents **52** du peigne **51** sont parallèles entre elles et contenues dans un plan P. Chaque dent **52** forme alors une barre de guidage et de renvoi pour un élément filaire, comme le montrent la **fig. 11****.** Afin de permettre une variation de la distance **d',** mesurée, en amont des moyens de calibrage, entres les fibres moyennes des éléments filaires, il est prévu des moyens de déplacement du peigne **51** en rotation selon un axe Δ' parallèle au plan **P** et perpendiculaire à l'axe Δ. Ainsi, par la rotation du peigne **51,** il est possible de modifier la distance entre les éléments filaires **11₁** à **11ₙ.** Chaque dent **52** de guidage et de renvoi d'un élément filaire **Eₙ** sera alors positionnée par rapport à la gorge de calibrage, de façon à ce que l'élément filaire arrive centré, en entrée de cette dernière, l'élément filaire effectuant un quart de tour entre la sortie du peigne **51** et l'arrivée sur les moyens de calibrage **34.**

Bien entendu, selon l'invention il est possible de réaliser autrement les moyens de positionnement des éléments filaires. On pourra notamment se référer aux documents suivants : WO 84/00351, EP 0681 981, FR 1 584 056 ou FR 2 579 964, qui décrivent des systèmes de peigne rotatif ou de peigne à dents non parallèles.

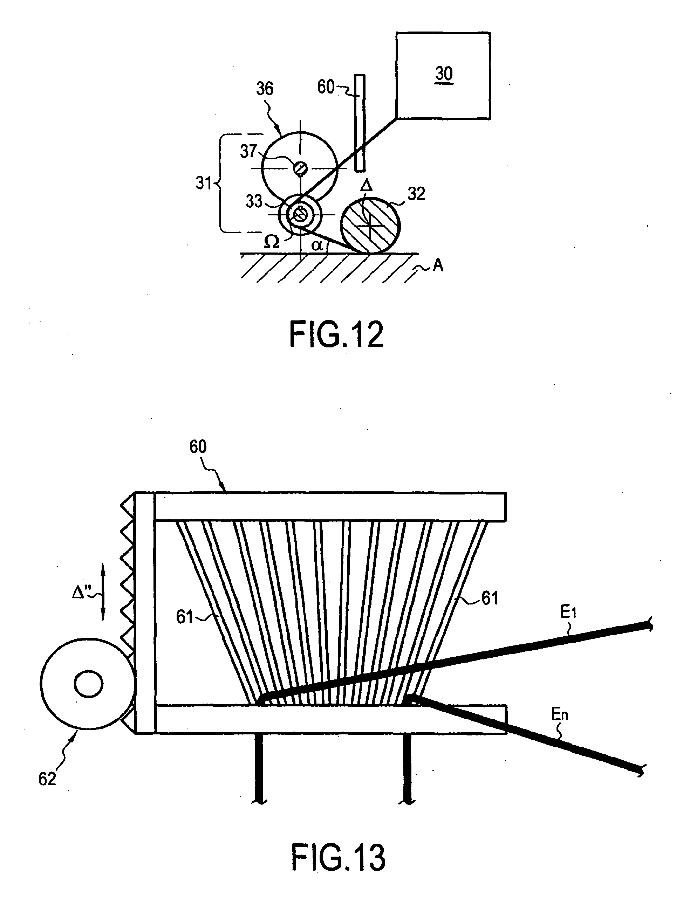

La **fig. 12** représente un dispositif conforme à celui de la **fig. 5** qui comprend, en outre, un peigne à dents non parallèles **60** positionné entre les moyens d'amenée **30** des éléments filaires et les moyens de guidage **31.** La **fig. 13** est une vue de face du peigne **60** qui joue le rôle de moyens de positionnement des éléments filaires **E₁** à **Eₙ** par rapport aux gorges de calibrage **34.**

Le peigne **60** comprend au moins autant de dents **61** que d'éléments filaires **E₁** à **Eₙ** déposés simultanément. Les dents **61** du peigne sont contenues dans un plan **P** parallèle à l'axe Ω du cylindre de guidage des gorges de calibrage, et convergent dans une même direction. Chaque dent **61** forme une barre de guidage et de renvoi pour un élément filaire. Afin de garantir l'efficacité du peigne, chaque élément filaire possède, en amont du peigne, une trajectoire oblique par rapport au plan du peigne et par rapport à un plan passant par la dent correspondante, en étant perpendiculaire au plan du peigne. Afin de permettre une modification de la distance entre les fibres moyennes des éléments filaires, il est prévu des moyens de déplacement du peigne **60** en translation parallèlement à son plan et selon une direction **Δ"** perpendiculaire à Ω du cylindre de guidage des gorges de calibrage. Sur la **fig. 13****,** ces moyens de déplacement **63** comportent une crémaillère solidaire du peigne sur laquelle s'engrène un pignon d'un moteur pas à pas. Ainsi, en faisant varier la position du peigne, il est possible de faire varier les distances entre deux éléments filaires voisins et d'ajuster cette distance par rapport au positionnement des gorges de calibrages **34.** Comme précédemment décrit, le déplacement du peigne sera synchronisé avec le déplacement des gorges de calibrage, de façon à ce que chaque élément filaire arrive sur la gorge de calibrage de façon centrée par rapport au fond de la section de passage. Chaque dent **61** de guidage et de renvoi d'un élément filaire **En** sera alors positionnée par rapport à la gorge de calibrage, de façon à ce que l'élément filaire arrive centré, en entrée de cette dernière, l'élément filaire effectuant un quart de tour entre la sortie du peigne **60** et l'arrivée sur les moyens de calibrage **34.**

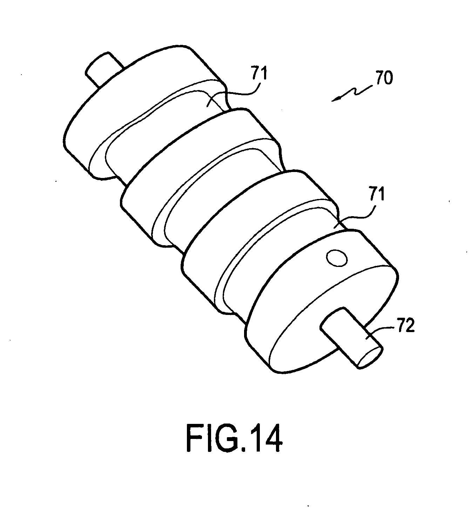

Selon une autre variante de réalisation, le dispositif précédemment décrit pourra comporter en tant que moyens de guidage, des moyens de guidage qui comprennent les moyens de modification de la largeur des éléments filaires et également de leur distance inter fibres et se présentent sous la forme d'un cylindre multi-gorges **70** tel qu'illustré **fig. 14****.** Un tel cylindre présente une série de gorges **71** de guidage, non parallèles et de largeur variable. Le nombre de gorges **70** est au moins égal au nombre d'éléments filaires déposés simultanément.

En particulier, les gorges ont des trajectoires convergentes et leur largeur varie proportionnellement à la distance les séparant. Dans ce cas, chaque élément filaire est amené est guidé dans chacune des gorges, avant d'être appliqué sur le support. Le cylindre **70** multi-gorges est positionné en amont des moyens **32** d'application des éléments filaires en remplacement des moyens de guidage **31,** comme représenté sur les **fig. 5** et **12** notamment. Par rotation du cylindre multigorges **70,** autour d'un arbre d'entraînement **72,** on fait varier en continu et simultanément la largeur et la distance inter fibres des éléments filaires.

Bien entendu, les gorges de calibrage présentes sur les moyens de calibrage présentés en **fig. 7, 8** et **14**, présentent une section de passage pour l'élément filaire à fond plat comme décrit précédemment pour la gorge présentée **fig. 2****.** Le fonctionnement, en ce qui concerne l'amenée et la sortie de l'élément filaire est également le même. C'est-à-dire que chaque élément filaire arrive, de préférence, centré par rapport à la section de passage en entrée des moyens de calibrage, pour ressortir après avoir fait sensiblement un demi-tour sur le support d'appui de forme cylindrique. La largeur de la section de passage en sortie des moyens de calibrage détermine la largeur de l'élément filaire qui va être déposé.

Dans le cas de la constitution de préformes, des nappes d'éléments filaires de largeur variable sont, soit déposées sur une surface de type support ou moule, soit sur une nappe précédente d'éléments filaires, s'étendant par exemple selon la ligne génératrice longitudinale de la surface. En général, plusieurs nappes d'éléments filaires s'étendant dans des directions différentes, seront associées. La liaison de chacune des nappes avec la surface sur laquelle elle est déposée peut se faire selon différentes techniques, par exemple comme décrit dans la demande de brevet FR 2 853 914 au nom de la demanderesse.

Selon l'invention, afin de garantir la stabilité du positionnement des éléments filaires, ces derniers sont, de préférence, liés à la surface du support **1.** L'adhérence des éléments filaires avec la surface sur laquelle ils sont déposés peut être obtenue, à laide d'un liant chimique, préalablement déposé sur la surface ou déposé, sur cette dernière, au fur et à mesure de la dépose de l'élément filaire. En général, dans une préforme, le pourcentage en masse de liant chimique par rapport à la masse totale de la préforme (c'est-à-dire éléments filaires + liant chimique) varie de 0,1 à 25 %, et avantageusement de 3 à 10 %. La masse des éléments filaires représentent donc de 99,9% à 75 % et, de préférence, de 97 à 90% de la masse totale de la préforme. Le liant, pour remplir sa fonction, peut nécessiter une activation, par exemple thermique. En tant que liant, on pourra utiliser, un agent adhésif, une poudre ou une résine thermoplastique ou thermodurcissable.

On peut également envisager de fixer les extrémités des segments des éléments filaires **11** par thermocollage le long d'un bord ou des deux bordures de la surface courbe, par exemple à l'aide d'une bande de film adhésif placé sur lesdites bordures.

Bien entendu, le procédé selon l'invention peut être mis en oeuvre uniquement pour la réalisation d'une partie d'une nappe. Dans le cas d'une préforme de forme ovoïde présentant des parties rectilignes, par exemple, les portions de la nappe transversale dans les parties courbées seront réalisées, selon le procédé de l'invention, alors que les portions dans les parties rectilignes seront réalisées avec des éléments filaires parallèles et de largeur constante.

Bien entendu, les différentes caractéristiques, variantes des formes de réalisation du procédé et du dispositif selon l'invention évoquées ci-dessus, peuvent être mises en oeuvre les unes avec les autres selon différentes combinaisons lorsqu'elles ne sont pas exclusives les unes des autres.

Un autre objet de l'invention est un procédé de réalisation d'une préforme comprenant les étapes qui consistent à superposer plusieurs nappes fibreuses s'étendant selon des directions différentes, et lier les nappes superposées entre elles, procédé dans lequel, au moins l'une des nappes est réalisée comme ci-dessus détaillé.

De telles préformes présentent généralement au moins une nappe d'éléments filaires sensiblement parallèles entre eux et parallèles à la ligne génératrice longitudinale de la surface et au moins une nappe d'éléments filaires non parallèles à la ligne génératrice longitudinale comme illustré **fig. 1****,** de telles préformes peuvent, par exemple, comporter une première nappe d'éléments filaires **30₁** à **30ₙ** s'étendant selon des spires de forme générale ovoïde (dans le cas d'une préforme ellipsoïdale) ou cercles (dans le cas d'une préforme annulaire) concentriques déposés en spirale, nommée nappe de fils à 0°, et une seconde nappe d'éléments filaires s'étendant selon des directions sécantes avec les fils de la première nappe, par exemple selon des directions radiales ou centrifuges et présentant une largeur variable comme précédemment décrit, nommé nappe de fils à 90°, puis à nouveau une nappe d'éléments filaires s'étendant selon des spires ou cercles et une nouvelle nappe d'éléments filaires non parallèles par exemple à +60°, -60°, +45° ou -45°, et ainsi de suite, jusqu'à obtenir l'épaisseur et la forme recherchée. Selon un aspect préféré, l'invention a pour objet de telles préformes de forme adaptée pour la réalisation de hublot.

Les deux exemples ci-après permettent d'illustrer le procédé selon l'invention.

Le premier exemple concerne la dépose d'un fil de carbone de 12 K 800 Tex radialement sur une préforme annulaire pour hublot, de rayon interne 134mm et de rayon externe 215mm. De tels fils de carbone ont une largeur de 5-6 mm en sortie de la bobine. Dans ce cas, les segments de fils déposés ont une largeur qui croit régulièrement de 2,45mm à 3,93mm, lorsque l'on se déplace radialement, de l'intérieur vers l'extérieur de la préforme, et sont déposés sans recouvrement ni jours entre les fils.

Le second exemple concerne la dépose d'un fil de carbone de 12K 800 Tex radialement sur une préforme pour poutre de fuselage de rayon intérieur 1500mm et de rayon extérieur 1600mm. Dans ce cas, les segments de fils déposés ont une largeur qui croit régulièrement de 4,13mm au rayon intérieur à 4,41mm au rayon extérieur, afin de n'avoir ni recouvrement ni jours entre les fils.

Si on reprend les deux exemples précédents, en utilisant un fil de 24K 1600 Tex, au lieu du fil de 12K 800Tex, toutes les valeurs de largeur de fils sont alors doublées.

## Revendications

1. Procédé de placement d'au moins un élément filaire (**11₁**) sur une surface (**S**), dans lequel, au moins un élément filaire (**11₁**) est déposé sur la surface (**S**) et est lié à au moins une partie de ladite surface, la largeur (**I**) de l'élément filaire (**11₁**) déposé variant longitudinalement
**caractérisé en ce que** la largeur de l'élément filaire est modifiée, en amont de la dépose, grâce à des moyens de réglage de sa largeur.

2. Procédé selon la revendication 1 **caractérisé en ce que** l'élément filaire est sec, avant sa dépose.

3. Procédé selon la revendication 1 ou 2 **caractérisé en ce que** les moyens de réglage utilisés délimitent une ouverture de calibrage qui possède une section de passage, pour l'élément filaire, de largeur variable à fond plat.

4. Procédé selon la revendication 3 **caractérisé en ce que** le fond de la section de passage est délimité par un support d'appui, pour l'élément filaire, de forme cylindrique.

5. Procédé selon la revendication 4 **caractérisé en ce que** l'on fait varier en continu l'ouverture de calibrage de façon à faire varier de façon régulière, par croissance ou décroissance, la largeur de l'élément filaire.

6. Procédé selon l'une des revendications 1 à 5 **caractérisé en ce que** l'élément filaire (11₁) est, en amont des moyens de réglage, positionné précisément, par rapport à ces derniers.

7. Procédé selon l'une des revendications 1 à 6 **caractérisé en ce que** l'élément filaire (11₁) est amené sur les moyens de réglage, de façon à être centré sur ces derniers.

8. Procédé selon l'une des revendications 1 à 7 **caractérisé en ce qu'**on utilise en tant que moyens de réglage une gorge de largeur variable à fond plat aménagé sur un support cylindrique.

9. Procédé selon l'une des revendications 1 à 8 **caractérisé en ce qu'**une série d'éléments filaires (**11₁** à **11**ₙ) est déposée selon des directions non parallèles, en faisant varier la largeur de chacun desdits éléments filaires (**11₁** à **11**ₙ).

10. Procédé selon la revendication 9 **caractérisé en ce que** la série d'éléments filaires (**11₁** à **11**ₙ) est déposée selon des directions convergentes, en faisant décroître la largeur (**I**) de chacun desdits éléments filaires (**11₁** à **11**ₙ) dans le sens de la convergence.

11. Procédé selon la revendication 9 ou 10 **caractérisé en ce que** la largeur (**I**) des éléments filaires (**11₁** à **11**ₙ) décroît, de façon proportionnelle à la distance (**d**) séparant les fibres moyennes de deux éléments filaires consécutifs.

12. Procédé selon l'une des revendications 9 à 11 **caractérisé en ce que** la surface (**S**), sur laquelle les éléments filaires (**11₁** à **11**ₙ) sont déposés, s'étend longitudinalement, selon une ligne génératrice (**L**) courbe, et les éléments filaires (**11₁** à **11**ₙ) sont déposés pour être sécants avec la ligne génératrice longitudinale (**L**), chaque élément filaire formant à son point d'intersection avec cette dernière un angle identique non nul.

13. Procédé selon la revendication 12 **caractérisé en ce que** les éléments filaires (**11₁** à **11**ₙ) forment un angle de 90°, +60°, -60°, +45° ou -45° avec la ligne génératrice (**L**).

14. Procédé selon l'une des revendications 9 à 13 **caractérisé en ce qu'**il n'existe aucun espace ou vide entre deux éléments filaires consécutifs déposés sur la surface (**S**).

15. Procédé selon l'une des revendications 9 à 14 **caractérisé en ce que** les éléments filaires (**11₁** à **11**ₙ) déposés se présentent sous la forme de segments adjacents sur toute leur longueur.

16. Procédé selon l'une des revendications précédentes **caractérisée en ce que** la surface (**S**) sur laquelle sont déposés le ou les éléments filaires (**11₁** à **11**ₙ) est de forme annulaire

17. Procédé selon l'une des revendications précédentes
**caractérisé en ce qu'**il comprend :
- une étape de dépose simultanée d'une série d'éléments filaires séparés deux à deux au niveau de la surface du support par un espace intercalaire,
- et une étape de dépose simultanée d'une série d'éléments filaires, chacun placé dans un espace intercalaire séparant les éléments filaires déposés lors de l'étape précédente.

18. Procédé selon l'une des revendications précédentes **caractérisé en ce que** le ou les éléments filaires (**11₁** à **11**ₙ) sont en une matière choisie parmi le carbone, les céramiques, verres ou aramides.

19. Procédé selon l'une des revendications précédentes **caractérisé en ce que** le ou les éléments filaires (**11₁** à **11**ₙ) sont des fils continus.

20. Procédé selon l'une des revendications précédentes **caractérisé en ce que** le ou les éléments filaires (**11₁** à **11ₙ**) sont des fils continus constitués d'un ensemble de 3 000 à 24 000 filaments.

21. Procédé selon l'une des revendications précédentes **caractérisé en ce que** la liaison à la surface (**S**) du ou des éléments filaires (**11₁** à **11ₙ**) est réalisée par un liant chimique.

22. Procédé selon l'une des revendications 1 à 21 qui comprend les étapes qui consistent à superposer plusieurs nappes fibreuses d'éléments filaires (**11₁** à **11ₙ**, 30 à 30ₙ) s'étendant selon des directions différentes, et à lier les nappes superposées entre elles, de manière à réaliser une préforme.

23. Préforme comprenant une superposition de plusieurs nappes fibreuses s'étendant selon des directions différentes et liées entre elles, dans laquelle, la masse des éléments filaires représentent de 99,9% à 75 % et, de préférence, de 97 à 90% de la masse totale de la préforme, **caractérisée en ce qu'**au moins l'une des nappes fibreuses comprend au moins un élément filaire dont la largeur varie longitudinalement.

24. Préforme selon la revendication 23 **caractérisée en ce qu'**au moins une des nappes comprend une série d'éléments filaires (**11₁** à **11ₙ**) s'étendant selon des directions non parallèles, la largeur de chacun desdits éléments filaires (**11₁** à **11ₙ**), variant longitudinalement.

25. Préforme selon la revendication 24 **caractérisée en ce que** lesdits éléments filaires (**11₁** à **11ₙ**) s'étendent selon des directions convergentes et **en ce que** leur largeur diminue, dans le sens de la convergence.

26. Préforme selon la revendication 25 **caractérisée en ce que** la largeur des éléments filaires (**11₁** à **11ₙ**) décroît, de façon proportionnelle à la distance séparant les fibres moyennes de deux éléments filaires consécutifs.

27. Préforme selon l'une des revendications 23 à 26 **caractérisée en ce que** la surface, sur laquelle les éléments filaires (**11₁** à **11ₙ**) sont déposés, s'étend longitudinalement, selon une ligne génératrice (**L**) courbe, et les éléments filaires (**11₁** à **11ₙ**) sont déposés pour être sécants avec la ligne génératrice longitudinale (**L**), chaque élément filaire formant à son point d'intersection avec cette dernière un angle identique non nul.

28. Préforme selon l'une des revendications 23 à 27 **caractérisée en ce que** les éléments filaires (**11₁** à **11ₙ**) s'étendent selon un angle de 90°, +60°, -60°, +45° ou -45° avec la ligne génératrice (**L**).

29. Préforme selon l'une des revendications 23 à 28 **caractérisée en ce qu'**il n'existe aucun espace ou vide entre deux éléments filaires consécutifs déposés sur la surface.

30. Préforme selon l'une des revendications 23 à 29 **caractérisée en ce que** les éléments filaires (**11₁** à **11**ₙ) sont déposés sous la forme de segments adjacents sur toute leur longueur.

31. Préforme selon l'une des revendications 23 à 30 **caractérisée en ce que** la surface (**S**) sur laquelle sont déposés les éléments filaires est de forme annulaire et les éléments filaires (**11₁** à **11**ₙ) sont déposés de façon sensiblement radiale.

32. Préforme selon l'une des revendications 23 à 31 **caractérisée en ce que** les éléments filaires qui la constituent sont en une matière choisie parmi le carbone, les céramiques, verres ou aramides.

33. Préforme selon l'une des revendications 23 à 32 **caractérisée en ce que** les éléments filaires qui la constituent sont des fils continus.

34. Préforme selon l'une des revendications 23 à 33 **caractérisée en ce que** les éléments filaires qui la constituent sont des fils continus constitués d'un ensemble de 3 000 à 24 000 filaments.

35. Préforme selon l'une des revendications 23 à 34 **caractérisé en ce que** les différentes nappes sont liées entre elles par un liant chimique.

36. Dispositif de placement d'un ou d'une série d'éléments filaires (**11₁** à **11ₙ**), sur une surface (**A**, **S**), qui comprend des moyens de prise en charge et d'avance (30) de chaque élément filaire, sur des moyens de réglage (**20**, **26**, **34**), avant dépôt, de la largueur de chaque élément filaire, dans sa direction longitudinale et des moyens de dépose (**32**) de chaque élément filaire, selon la direction souhaitée.

37. Dispositif de placement selon la revendication 36 **caractérisé en ce que** les moyens de réglage délimitent une ouverture de calibrage qui possède une section de passage, pour l'élément filaire, de largeur variable.

38. Dispositif de placement selon la revendication 37 **caractérisé en ce que** l'ouverture de calibrage est de forme rectangulaire ou en « U », à fond plat

39. Dispositif selon l'une des revendications 37 ou 39 **caractérisé en ce que** le fond de la section de passage est délimité par un support d'appui (**23**, **27**, **33**), pour l'élément filaire, de forme cylindrique.

40. Dispositif de placement selon la revendication 37, 38, ou 39, **caractérisé en ce qu'**il comporte des moyens pour faire varier en continu la largeur de l'ouverture de calibrage, de façon à faire varier de façon régulière, par croissance ou décroissance, la largeur de l'élément filaire.

41. Dispositif selon l'une des revendications 36 à 40 **caractérisé en ce que** les moyens de modification de la largeur de l'élément filaire sont intégrés à des moyens de guidage individuel de l'élément filaire.

42. Dispositif selon l'une des revendications 36 à 41 **caractérisé en que** les moyens de réglage de la largueur de chaque élément filaire comprennent une gorge de largeur variable, à fond plat, aménagée sur un support cylindrique.

43. Dispositif selon l'une des revendications 36 à 42 **caractérisé en ce qu**'il comprend des moyens de modification de la distance entre les fibres moyennes de d'au moins deux éléments filaires voisins, de manière à permettre une modification de la distance (**d**), mesurée au niveau de la surface du support (**1**,**A**), entre les fibres moyennes (**f**) des deux éléments filaires voisins (**11₁, 11₂**).

44. Dispositif selon la revendication 43 **caractérisé en que** qu'il comporte des moyens de guidage individuel (**31**) de chaque élément filaire (**11₁** à **11**ₙ), et en ce que les moyens de modification de la distance entre les fibres moyennes de deux éléments filaires voisins sont des moyens de modification de la distance entre les moyens de guidage individuel de chaque élément filaire.

45. Dispositif selon l'une des revendications 36 à 44 **caractérisé en que** les moyens de réglage de la largeur de chaque élément filaire comprennent :
• un cylindre (**33**) de guidage d'axe Ω présentant une gorge de calibrage (**34**) qui est aménagée sur une partie au moins de la périphérie du cylindre (**33**) et possède une largeur variable et dont une partie seulement, dite partie active (**40**), est en relation avec l'élément filaire, en sortie de l'élément filaire des moyens de modification de sa largeur,
• et des moyens de déplacement (**41**) en rotation du cylindre de guidage selon l'axe Ω, de manière à permettre une modification de la partie de la gorge de calibrage formant la partie active en relation avec l'élément filaire.

46. Dispositif selon la revendication 45 **caractérisé en ce qu'**il comprend des moyens de modification de la distance entre les parties actives des cylindres de guidage.

47. Dispositif selon l'une des revendications 36 à 46 **caractérisé en ce qu'**il comporte des moyens de dépose d'une nappe d'éléments filaires, sur une surface, selon des directions convergentes et des moyens de réglage, pour obtenir avant dépôt, lesdits éléments filaires avec une largeur décroissante dans le sens de la convergence.

48. Dispositif selon l'une des revendications 36 à 47 **caractérisé en ce qu'**il comporte en amont des moyens de réglage, des moyens de positionnement de chaque élément filaire par rapport aux moyens assurant le réglage de sa largeur.

49. Dispositif selon la revendication 48 **caractérisé en ce que** les moyens de positionnement sont des moyens de centrage de chaque élément filaire sur ses moyens de calibrage.

50. Dispositif selon la revendication 48 ou 49 **caractérisé en ce que** les moyens de positionnement sont un peigne rotatif (**51**) ou un peigne à dents non parallèles (**60**), en particulier convergentes.

## Claims

1. A method for placing at least one wire element (11₁) on a surface (S), wherein at least one wire element (11₁) is deposited on the surface (S) and is bound to at least one portion of said surface, the width (1) of the deposited wire element (11₁) varying longitudinally,
**characterized in that** the width of the wire element is modified upstream from the deposit, by means for adjusting its width.

2. The method according to claim 1, **characterized in that** the wire element is dry before its being deposited.

3. The method according to claim 1 or 2, **characterized in that** the adjustment means used delimit a calibration aperture which has a flat-bottomed section for letting through the wire element with variable width.

4. The method according to claim 3, **characterized in that** the bottom of the passage section is delimited by a bearing support for the wire element, with a cylindrical shape.

5. The method according to claim 4, **characterized in that** the calibration aperture is continuously varied so as to regularly vary the width of the wire element by increasing or decreasing it.

6. The method according to any of claims 1 to 5, **characterized in that** the wire element (11₁) is upstream from the adjustment means, specifically positioned relative to the latter.

7. The method according to any of claims 1 to 6, **characterized in that** the wire element (11₁) is brought onto the adjustment means so as to be centred on the latter.

8. The method according to any of claims 1 to 7, **characterized in that** a flat-bottomed groove with variable width, laid out on a cylindrical support, is used as adjustment means.

9. The method according to any of claims 1 to 8, **characterized in that** a series of wire elements (11₁-11ₙ) is deposited along non-parallel directions, by varying the width of each of said wire elements (11₁-11ₙ).

10. The method according to claim 9, **characterized in that** the series of wire elements (11₁-11ₙ) is deposited along convergent directions, by decreasing the width (1) of each of said wire elements (11₁-11ₙ) in the direction of the convergence.

11. The method according to claim 9 or 10, **characterized in that** the width (1) of the wire elements (11₁-11ₙ) decreases in proportion with the distance (d) separating the medium fibers of two consecutive wire elements.

12. The method according to any of claims 9 to 11, **characterized in that** the surface (S) on which the wire elements (11₁-11ₙ) are deposited, extends longitudinally, along a curved generatrix line (L), and the wire elements (11₁-11ₙ) are deposited so as to be secant with the longitudinal generatrix line (L), each wire element forming at its point of intersection with the latter an identical non-zero angle.

13. The method according to claim 12, **characterized in that** the wire elements (11₁-11ₙ) form an angle of 90°, +60°, - 60°, +45° or -45° with the generatrix line (L).

14. The method according to any of claims 9 to 13, **characterized in that** there is no space or void between two consecutive wire elements deposited on the surface (S).

15. The method according to any of claims 9 to 14, **characterized in that** the deposited wire elements (11₁-11ₙ) appear as adjacent segments over the whole of their length.

16. The method according to any of the preceding claims, **characterized in that** the surface (S) on which the wire element(s) (11₁-11ₙ) are deposited is ring-shaped.

17. The method according to any of the preceding claims, **characterized in that** it comprises:
- a step for simultaneously depositing a series of wire elements separated two by two at the surface of the support by an intermediate space,
- and a step for simultaneously depositing a series of wire elements, each placed in an intermediate space separating the wire elements deposited during the preceding step.

18. The method according to any of the preceding claims, **characterized in that** the wire element (s) (11₁-11ₙ) are in a material selected from carbon, ceramics, glasses or aramides.

19. The method according to any of the preceding claims, **characterized in that** the wire element(s) (11₁-11ₙ) are continuous wires.

20. The method according to any of the preceding claims, **characterized in that** the wire element(s) (11₁-11ₙ) are continuous wires consisting of an assembly of 3,000 to 24,000 filaments.

21. The method according to any of the preceding claims, **characterized in that** the binding of the wire element(s) (11₁-11ₙ) to the surface (S) is achieved by a chemical binder.

22. The method according to any of claims 1 to 21 which comprises the steps consisting of superposing several fiber layers of wire elements (11₁-11ₙ, 30-30ₙ) extending along different directions, and of binding the superimposed layers together so as to make a preform.

23. A preform comprising a superposition of several fiber layers extending along different directions and bound together, wherein the mass of the wire elements represent 99.9% to 75% and preferably from 97 to 90% of the total mass of the preform, **characterized in that** at least one of the fiber layers comprises at least one wire element, the width of which varies longitudinally.

24. The preform according to claim 23, **characterized in that** at least one of the layers comprises a series of wire elements (11₁-11ₙ) extending along non-parallel directions, the width of each of said wire elements (11₁-11ₙ) varying longitudinally.

25. The preform according to claim 24, **characterized in that** said wire elements (11₁-11ₙ) extend along convergent directions and **in that** their width decreases in the direction of the convergence.

26. The preform according to claim 25, **characterized in that** the width of the wire elements (11₁-11ₙ) decreases in proportion with the distance separating the medium fibers of two consecutive wire elements.

27. The preform according to any of claims 23 to 26, **characterized in that** the surface, on which the wire elements (11₁-11ₙ) are deposited, extends longitudinally along a curved generatrix line (L), and the wire elements (11₁-11ₙ) are deposited so as to be secant with the longitudinal generatrix line (L), each wire element forming at its point of intersection with the latter an identical non-zero angle.

28. The preform according to any of claims 23 to 27, **characterized in that** the wire elements (11₁-11ₙ) extend according to an angle of 90°, +60°, -60°, +45° or -45° with the generatrix line (L).

29. The preform according to any of claims 23 to 28, **characterized in that** no space or void exists between two consecutive wire elements deposited on the surface.

30. The preform according to any of claims 23 to 29, **characterized in that** the wire elements (11₁-11ₙ) are deposited as adjacent segments over the whole of their length.

31. The preform according to any of claims 23 to 30, **characterized in that** the surface (S) on which the wire elements are deposited, is ring-shaped and the wire elements (11₁-11ₙ) are deposited substantially radially.

32. The preform according to any of claims 23 to 31, **characterized in that** the wire elements which make it up are in a material selected from carbon, ceramics, glasses, or aramides.

33. The preform according to any of claims 23 to 32, **characterized in that** the wire elements which make it up are continuous wires.

34. The preform according to any of claims 23 to 33, **characterized in that** the wire elements which make it up are continuous wires consisting of an assembly of 3,000 to 24,000 filaments.

35. The preform according to any of claims 23 to 34, **characterized in that** the different layers are bound together by a chemical binder.

36. A device for placing one or a series of wire elements (11₁-11ₙ), on a surface (A, S), which comprises means for handling and advancing (30) each wire elements, on means (20, 26, 34) for adjusting the width of each wire element before its being deposited, in its longitudinal direction and means (32) for depositing each wire element, along the desired direction.

37. The placement device according to claim 36, **characterized in that** the adjustment means delimit a calibration aperture which has a section for letting through the wire element, with variable width.

38. The placement device according to claim 37, **characterized in that** the calibration aperture is of a rectangular shape or U-shaped, with a flat bottom.

39. The device according to any of claims 37 or 39, **characterized in that** the bottom of the passage section is delimited by a bearing support (23, 27, 33), for the wire element, of cylindrical shape.

40. The placement device according to claim 37, 38 or 39, **characterized in that** it includes means for continuously varying the width of the calibration aperture, so as to regularly vary the width of the wire element by increasing or decreasing it.

41. The device according to any of claims 36 to 40, **characterized in that** the means for modifying the width of the wire element are integrated to means for individually guiding the wire element.

42. The device according to any of claims 36 to 41, **characterized in that** the means for adjusting the width of each wire element comprise a flat-bottomed groove of variable width, laid out on a cylindrical support.

43. The device according to any of claims 36 to 42, **characterized in that** it comprises means for modifying the distance between the medium fibers of at least two neighbouring wire elements, so as to allow a modification of the distance (d), measured at the surface of the support (1, A), between the medium fibers (f) of two neighbouring wire elements (11₁-11₂),

44. The device according to claim 43, **characterized in that** it includes means (31) for individually guiding each wire elements (11₁-11ₙ), and **in that** the means for modifying the distance between the medium fibers of two neighbouring wire elements are means for modifying the distance between the means for individually guiding each wire element.

45. The device according to any of claims 36 to 44, **characterized in that** the means for adjusting the width of each wire element comprise:
• a guiding cylinder (33) with an axis Ω having a calibration groove (34) which is laid out on at least one portion of the periphery of the cylinder (33) and has variable width and only a portion of which, a so-called active portion (40), is in relation with the wire element, at the output of the wire element of the means for modifying its width,
• and means (41) for displacing in rotation the guiding cylinder along the Ω axis, so as to allow a modification of the portion of the calibration groove forming the active portion in relation with the wire element.

46. The device according to claim 45, **characterized in that** it comprises means for modifying the distance between the active portions of the guiding cylinders.

47. The device according to any of claims 36 to 46, **characterized in that** it includes means for depositing a layer of wire elements, on a surface, along convergent directions and adjustment means in order to obtain before deposit, said wire elements with decreasing width in the direction of the convergence.

48. The device according to any of claims 36 to 47, **characterized in that** it includes upstream from the adjustment means, means for positioning each wire element relatively to the means providing adjustment of its width.

49. The device according to claim 48, **characterized in that** the positioning means are means for centring each wire element on its calibration means.

50. The device according to claim 48 or 49, **characterized in that** the positioning means are a rotary comb (51) or a comb with non-parallel, in particular convergent teeth (60).

## Patentansprüche

1. Verfahren zum Plazieren wenigstens eines Fadenelements (11₁) auf einer Fläche (S), bei dem wenigstens ein Fadenelement (11₁) auf die Fläche (S) aufgebracht und mit wenigstens einem Teil der Fläche verbunden wird, wobei die Breite (I) des aufgebrachten Fadenelements (11₁) in Längsrichtung variiert, **dadurch gekennzeichnet daß** die Breite des Fadenelements vor dem Aufbringen mit Hilfe von Mitteln zum Einstellen seiner Breite verändert wird.

2. Verfahren nach Anspruch 1, **dadurch gekennzeichnet, daß** das Fadenelement vor seinem Aufbringen trocken ist.

3. Verfahren nach Anspruch 1 oder 2, **dadurch gekennzeichnet, daß** die verwendeten Einstellmittel eine Kalibrieröffnung begrenzen, die einen Durchgangsquerschnitt für das Fadenelement, mit variabler Breite mit flachem Boden besitzt.

4. Verfahren nach Anspruch 3, **dadurch gekennzeichnet, daß** der Boden des Durchgangsquerschnitts durch einen zylinderförmigen Stützträger für das Fadenelement begrenzt ist.

5. Verfahren nach Anspruch 4, **dadurch gekennzeichnet, daß** man die Kalibrieröffnung kontinuierlich variieren läßt, so daß die Breite des Fadenelements durch Zunahme oder Abnahme gleichmäßig verändert wird.

6. Verfahren nach einem der Ansprüche 1 bis 5, **dadurch gekennzeichnet, daß** das Fadenelement (11₁) vor den Einstellmitteln präzise gegenüber letzteren positioniert wird.

7. Verfahren nach einem der Ansprüche 1 bis 6, **dadurch gekennzeichnet, daß** das Fadenelement (11₁) so auf die Einstellmittel geführt wird, daß es auf diesen zentriert ist.

8. Verfahren nach einem der Ansprüche 1 bis 7, **dadurch gekennzeichnet, daß** als Einstellmittel eine an einem zylindrischen Träger ausgebildete Rille mit variabler Breite mit flachem Boden verwendet wird.

9. Verfahren nach einem der Ansprüche 1 bis 8, **dadurch gekennzeichnet, daß** eine Reihe von Fadenelementen (11₁ bis 11ₙ) in nicht parallelen Richtungen, unter Veränderung der Breite eines jeden der Fadenelemente (11₁ bis 11ₙ) aufgebracht wird.

10. Verfahren nach Anspruch 9, **dadurch gekennzeichnet, daß** die Reihe von Fadenelementen (11₁ bis 11ₙ) in konvergenten Richtungen unter Verringerung der Breite (I) eines jeden der Fadenelemente (11₁ bis 11ₙ) in Richtung der Konvergenz aufgebracht wird.

11. Verfahren nach Anspruch 9 oder 10, **dadurch gekennzeichnet, daß** die Breite (I) der Fadenelemente (11₁ bis 11ₙ) proportional zum Abstand (d) zwischen den mittleren Fasern von zwei aufeinanderfolgenden Fadenelementen abnimmt.

12. Verfahren nach einem der Ansprüche 9 bis 11, **dadurch gekennzeichnet, daß** die Fläche (S), auf die die Fadenelemente (11₁ bis 11ₙ) aufgebracht werden, sich in Längsrichtung entlang einer gekrümmten Mantellinie (L) erstreckt und die Fadenelemente (11₁ bis 11ₙ) aufgebracht werden, um sich mit der Längsmantellinie (L) zu schneiden, wobei jedes Fadenelement an seinem Schnittpunkt mit dieser Mantellinie einen identischen Winkel ungleich null bildet.

13. Verfahren nach Anspruch 12, **dadurch gekennzeichnet, daß** die Fadenelemente (11₁ bis 11ₙ) einen Winkel von 90°, +60°, -60°, +45° oder -45° mit der Mantellinie (L) bilden.

14. Verfahren nach einem der Ansprüche 9 bis 13, **dadurch gekennzeichnet, daß** zwischen zwei aufeinanderfolgenden, auf die Fläche (S) aufgebrachten Fadenelementen kein Zwischen- oder Hohlraum vorhanden ist.

15. Verfahren nach einem der Ansprüche 9 bis 14, **dadurch gekennzeichnet, daß** die aufgebrachten Fadenelemente (11₁ bis 11ₙ) in Form von über die gesamte Länge aneinanderstoßenden Segmenten vorliegen.

16. Verfahren nach einem der vorhergehenden Ansprüche, **dadurch gekennzeichnet, daß** die Fläche (S), auf die das oder die Fadenelement(e) (11₁ bis 11ₙ) aufgebracht werden, ringförmig ist.

17. Verfahren nach einem der vorhergehenden Ansprüche, **dadurch gekennzeichnet, daß** es folgendes umfaßt:
- einen Schritt zum gleichzeitigen Aufbringen einer Reihe von im Bereich der Oberfläche des Trägers durch einen Zwischenraum paarweise getrennten Fadenelementen,
- und einen Schritt zum gleichzeitigen Aufbringen einer Reihe von Fadenelementen, die jeweils in einem Zwischenraum, der die während des vorhergehenden Schrittes aufgebrachten Fadenelemente trennt, plaziert werden.

18. Verfahren nach einem der vorhergehenden Ansprüche, **dadurch gekennzeichnet, daß** das oder die Fadenelement(e) (11₁ bis 11ₙ) aus einem Material bestehen, das aus Kohlenstoff, Keramik, Glas oder Aramid ausgewählt ist.

19. Verfahren nach einem der vorhergehenden Ansprüche, **dadurch gekennzeichnet, daß** das oder die Fadenelement(e) (11₁ bis 11ₙ) Endlosfäden sind.

20. Verfahren nach einem der vorhergehenden Ansprüche, **dadurch gekennzeichnet, daß** das oder die Fadenelement(e) (11₁ bis 11ₙ) Endlosfäden sind, die von einer Einheit aus 3000 bis 24000 Filamenten gebildet sind.

21. Verfahren nach einem der vorhergehenden Ansprüche, **dadurch gekennzeichnet, daß** das oder die Fadenelement(e) (11₁ bis 11ₙ) durch ein chemisches Bindemittel mit der Fläche (S) verbunden werden.

22. Verfahren nach einem der Ansprüche 1 bis 21, das die Schritte umfaßt, die darin bestehen, mehrere Faserlagen aus Fadenelementen (11₁ bis 11ₙ, 30 bis 30ₙ), die sich entlang unterschiedlicher Richtungen erstrecken, übereinander anzuordnen und die übereinander angeordneten Lagen untereinander zu verbinden, so daß ein Vorformling gebildet wird.

23. Vorformling mit einer Aufschichtung aus mehreren Faserlagen, die sich entlang unterschiedlicher Richtungen erstrecken und untereinander verbunden sind, bei dem die Masse der Fadenelemente 99,9 % bis 75 % und vorzugsweise 97 bis 90 % der Gesamtmasse des Vorformlings ausmacht, **dadurch gekennzeichnet, daß** wenigstens eine der Faserlagen wenigstens ein Fadenelement aufweist, dessen Breite in Längsrichtung variiert.

24. Vorformling nach Anspruch 23, **dadurch gekennzeichnet, daß** wenigstens eine der Lagen eine Reihe von Fadenelementen (11₁ bis 11ₙ) umfaßt, die sich in nicht parallelen Richtungen erstrecken, wobei die Breite eines jeden der Fadenelemente (11₁ bis 11ₙ) in Längsrichtung variiert.

25. Vorformling nach Anspruch 24, **dadurch gekennzeichnet, daß** die Fadenelemente (11₁ bis 11ₙ) sich in konvergenten Richtungen erstrecken und daß ihre Breite in Richtung der Konvergenz abnimmt.

26. Vorformling nach Anspruch 25, **dadurch gekennzeichnet, daß** die Breite der Fadenelemente (11₁ bis 11ₙ) proportional zum Abstand zwischen den mittleren Fasern von zwei aufeinanderfolgenden Fadenelementen abnimmt.

27. Vorformling nach einem der Ansprüche 23 bis 26, **dadurch gekennzeichnet, daß** die Fläche, auf die die Fadenelemente (11₁ bis 11ₙ) aufgebracht werden, sich in Längsrichtung entlang einer gekrümmten Mantellinie (L) erstreckt und die Fadenelemente (11₁ bis 11ₙ) aufgebracht werden, um sich mit der Längsmantellinie (L) zu schneiden, wobei jedes Fadenelement an seinem Schnittpunkt mit dieser Mantellinie einen identischen Winkel ungleich null bildet.

28. Vorformling nach einem der Ansprüche 23 bis 27, **dadurch gekennzeichnet, daß** die Fadenelemente (11₁ bis 11ₙ) sich unter einem Winkel von 90°, +60°, -60°, +45° oder -45° zu der Mantellinie (L) erstrecken.

29. Vorformling nach einem der Ansprüche 23 bis 28, **dadurch gekennzeichnet, daß** zwischen zwei aufeinanderfolgenden, auf die Fläche (S) aufgebrachten Fadenelementen kein Zwischen- oder Hohlraum vorhanden ist.

30. Vorformling nach einem der Ansprüche 23 bis 29, **dadurch gekennzeichnet, daß** die Fadenelemente (11₁ bis 11ₙ) in Form von über die gesamte Länge aneinanderstoßenden Segmenten aufgebracht werden.

31. Vorformling nach einem der Ansprüche 23 bis 30, **dadurch gekennzeichnet, daß** die Fläche (S), auf die die Fadenelemente aufgebracht werden, ringförmig ist und daß die Fadenelemente (11₁ bis 11ₙ) im wesentlichen radial aufgebracht werden.

32. Vorformling nach einem der Ansprüche 23 bis 31, **dadurch gekennzeichnet, daß** die ihn bildenden Fadenelemente aus einem Material bestehen, welches aus Kohlenstoff, Keramik, Glas oder Aramid ausgewählt ist.

33. Vorformling nach einem der Ansprüche 23 bis 32, **dadurch gekennzeichnet, daß** die ihn bildenden Fadenelemente Endlosfäden sind.

34. Vorformling nach einem der Ansprüche 23 bis 33, **dadurch gekennzeichnet, daß** die ihn bildenden Fadenelemente Endlosfäden sind, die von einer Einheit aus 3000 bis 24000 Filamenten gebildet sind.

35. Vorformling nach einem der Ansprüche 23 bis 34, **dadurch gekennzeichnet, daß** die verschiedenen Lagen durch ein chemisches Bindemittel untereinander verbunden sind.

36. Vorrichtung zum Plazieren eines Fadenelements oder einer Reihe von Fadenelementen (11₁ bis 11ₙ) auf einer Fläche (A, S), die Mittel (30) zum Übernehmen und Vorwärtsbewegen jedes Fadenelements über Mittel (20, 26, 34) zum Einstellen der Breite jedes Fadenelements vor dem Aufbringen entlang seiner Längsrichtung, sowie Mittel (32) zum Aufbringen jedes Fadenelements in der gewünschten Richtung umfaßt.

37. Plazierungsvorrichtung nach Anspruch 36, **dadurch gekennzeichnet, daß** die Einstellmittel eine Kalibrieröffnung begrenzen, die einen Durchgangsquerschnitt für das Fadenelement, mit variabler Breite besitzt.

38. Plazierungsvorrichtung nach Anspruch 37, **dadurch gekennzeichnet, daß** die Kalibrieröffnung eine Rechteck- oder U-Form mit flachem Boden aufweist.

39. Vorrichtung nach einem der Ansprüche 37 oder 39, **dadurch gekennzeichnet, daß** der Boden des Durchgangsquerschnittes durch einen zylinderförmigen Stützträger (23, 27, 33) für das Fadenelement begrenzt ist.

40. Plazierungsvorrichtung nach Anspruch 37, 38 oder 39, **dadurch gekennzeichnet, daß** sie Mittel aufweist, um die Breite der Kalibrieröffnung kontinuierlich variieren zu lassen, so daß die Breite des Fadenelements durch Zunahme oder Abnahme gleichmäßig verändert wird.

41. Vorrichtung nach einem der Ansprüche 36 bis 40, **dadurch gekennzeichnet, daß** die Mittel zum Verändern der Breite des Fadenelements in Mittel zum individuellen Führen des Fadenelements integriert sind.

42. Vorrichtung nach einem der Ansprüche 36 bis 41, **dadurch gekennzeichnet, daß** die Mittel zum Einstellen der Breite jedes Fadenelements eine Rille mit variabler Breite, mit flachem Boden aufweisen, die an einem zylindrischen Träger ausgebildet ist.

43. Vorrichtung nach einem der Ansprüche 36 bis 42, **dadurch gekennzeichnet, daß** sie Mittel zum Verändern des Abstandes zwischen den mittleren Fasern von wenigstens zwei benachbarten Fadenelementen aufweist, um eine Änderung des im Bereich der Oberfläche des Trägers (1,A) gemessenen Abstandes (d) zwischen den mittleren Fasern (f) der zwei benachbarten Fadenelemente (11₁, 11₂) zu ermöglichen.

44. Vorrichtung nach Anspruch 43, **dadurch gekennzeichnet, daß** sie Mittel (31) zum individuellen Führen jedes Fadenelements (11₁ bis 11ₙ) aufweist und daß die Mittel zum Verändern des Abstandes zwischen den mittleren Fasern von zwei benachbarten Fadenelementen Mittel zum Verändern des Abstandes zwischen den Mitteln zum individuellen Führen jedes Fadenelements sind.

45. Vorrichtung nach einem der Ansprüche 36 bis 44, **dadurch gekennzeichnet, daß** die Mittel zum Einstellen der Breite eines jeden Fadenelements folgendes umfassen:
- einen Führungszylinder (33) mit der Achse Ω, der eine Kalibrierrille (34) aufweist, welche an wenigstens einem Teil des Umfangs des Zylinders (33) ausgebildet ist und eine variable Breite aufweist und von der nur ein Teil, der sogenannte aktive Teil (40), mit dem Fadenelement, bei Austritt des Fadenelements aus den Mitteln zum Verändern seiner Breite, in Verbindung steht,
- sowie Mittel (41) zum Drehbewegen des Führungszylinders entlang der Achse Ω, um eine Änderung des Teils der Kalibrierrille, welcher den mit dem Fadenelement in Verbindung stehenden aktiven Teil bildet, zu ermöglichen.

46. Vorrichtung nach Anspruch 45, **dadurch gekennzeichnet, daß** sie Mittel zum Verändern des Abstandes zwischen den aktiven Teilen der Führungszylinder aufweist.

47. Vorrichtung nach einem der Ansprüche 36 bis 46, **dadurch gekennzeichnet, daß** sie Mittel zum Aufbringen einer Lage aus Fadenelementen auf eine Fläche entlang konvergenter Richtungen sowie Einstellmittel umfaßt, um vor dem Aufbringen die Fadenelemente mit einer in Richtung der Konvergenz abnehmenden Breite zu erhalten.

48. Vorrichtung nach einem der Ansprüche 36 bis 47, **dadurch gekennzeichnet, daß** sie vor den Einstellmitteln Mittel zum Positionieren jedes Fadenelements gegenüber den die Einstellung seiner Breite sicherstellenden Mitteln aufweist.

49. Vorrichtung nach Anspruch 48, **dadurch gekennzeichnet, daß** die Positionierungsmittel Mittel zum Zentrieren jedes Fadenelements auf seinen Kalibriermitteln sind.

50. Vorrichtung nach Anspruch 48 oder 49, **dadurch gekennzeichnet, daß** die Positionierungsmittel ein drehbarer Kamm (51) oder ein Kamm mit nicht parallelen, insbesondere konvergenten Zinken (60) sind.
